(19) Europäisches Patentamt
European Patent Office
Office européen des brevets

(11) **EP 2 910 755 B1**

(12) **EUROPÄISCHE PATENTSCHRIFT**

(45) Veröffentlichungstag und Bekanntmachung des Hinweises auf die Patenterteilung:
**15.08.2018  Patentblatt 2018/33**

(51) Int Cl.:
*F02D 35/02* *(2006.01)*       *F02D 41/00* *(2006.01)*

(21) Anmeldenummer: **15000277.2**

(22) Anmeldetag: **30.01.2015**

(54) **Verfahren zum Betreiben einer Brennkraftmaschine**

Method for operating a combustion engine

Procédé destiné au fonctionnement d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2014  AT 1202014**

(43) Veröffentlichungstag der Anmeldung:
**26.08.2015  Patentblatt 2015/35**

(73) Patentinhaber: **GE Jenbacher GmbH & Co OG 6200 Jenbach (AT)**

(72) Erfinder:
• **Kopecek, Herbert 6130 Schwaz (AT)**
• **Birgel, Andreas 6020 Innsbruck (AT)**

• **Schiestl, Stefan A - 6210 Wiesing (AT)**
• **Spyra, Nikolaus 6020 Innsbruck (AT)**
• **Waldhart, Michael A-6410 Telfs (AT)**

(74) Vertreter: **Torggler & Hofinger Patentanwälte Postfach 85 6010 Innsbruck (AT)**

(56) Entgegenhaltungen:
**EP-A1- 2 698 521       EP-A2- 1 162 357
WO-A2-2012/097389    DE-A1-102007 052 476
DE-C1- 19 736 131**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zum Betreiben einer Brennkraftmaschine, insbesondere eines Gasmotors, mit wenigstens einem Brennraum, dem eine Ladeluft mit einem veränderbaren Ladedruck und / oder mit einer veränderbaren Ladeluftmenge zugeführt wird, wobei aus wenigstens einem Meßwert eines im wenigstens einen Brennraum angeordneten Zylinderdrucksensors ein Zylinderdruckwert ermittelt wird, wobei der Zylinderdruckwert durch Änderung des Ladedrucks und / oder durch Änderung der Ladeluftmenge auf einen Zylinderdrucksollwert geregelt wird, wobei der Zylinderdrucksollwert von einer Leistung der Brennkraftmaschine abhängig gewählt wird; sowie eine Regelvorrichtung und eine Brennkraftmaschine zur Ausführung des vorgeschlagenen Verfahrens.

Einer der Haupteinflussfaktoren in Bezug auf Stickoxidemissionen (NO$_x$-Emissionen) einer Brennkraftmaschine ist das Verhältnis von Luft zu Brennstoff, welches auch als Lambdawert bekannt ist.

Im Stand der Technik ist bekannt, dass ein im Wesentlichen linearer Zusammenhang zwischen Ladedruck und Leistung der Brennkraftmaschine unter der Vorgabe besteht, im Wesentlichen konstante NO$_x$-Emissionen zu erzielen. So geht aus der EP 0 259 382 B1 ein Verfahren hervor, das Luft zu Brennstoff-Verhältnis bzw. den Lambdawert eines einer Brennkraftmaschine zugeführten Brennstoff-Luft-Gemischs abhängig von der Leistung der Brennkraftmaschine unter der Vorgabe von im Wesentlichen konstanten NO$_x$-Emissionen zu regeln, indem ein von der Leistung der Brennkraftmaschine abhängiger Sollwert für den Ladedruck vorgegeben wird und das Brennstoffluftverhältnis solange verändert wird, bis der tatsächliche Ladedruck dem vorgegebenen Sollwert entspricht.

Durch diese Art der Regelung kann zwar auf das Vorsehen einer Lambdasonde zur Ermittlung des Brennstoffluftverhältnisses verzichtet werden, jedoch wird dabei nicht berücksichtigt, dass der eigentliche Hauptfaktor für die Erzeugung von NO$_x$-Emissionen nicht der Ladedruck der den Brennräumen zugeführten Ladeluft ist, sondern die Luftmasse, die in den Brennräumen für die Verbrennung zur Verfügung steht. Die in den Brennräumen vorhandene Luftmasse kann dabei über die Betriebsdauer der Brennkraftmaschine Veränderungen unterliegen, die beispielsweise durch Verschleißerscheinungen an den Einlass- oder Auslassventilen für die Brennräume hervorgerufen werden können.

Aus dem Stand der Technik sind Ansätze bekannt, die der Brennkraftmaschine zugeführte Luftmasse zu regeln.

Die EP 1662121 beschreibt ein Verfahren zum Steuern einer Brennkraftmaschine, wobei die abgeschätzte Gesamtgasmasse als Eingabegröße für eine Steuereinrichtung der Brennkraftmaschine dient. Dazu wird beispielsweise aus dem Brennraumdruck eine zugeführte Gasmasse berechnet und diese Schätzwert der Steuerung des Einlasssystems zugeführt. Ein weiteres Beispiel wird in der Patentschrift DE 19736131 C1 beschrieben. Die EP 1162357 beschreibt ein Verfahren, wonach ein Brennraumdruck erfasst wird und aus diesem auf den Ladedruck oder den Abgasgegendruck des Verbrennungsmotors geschlossen wird. Ziel dieser Schrift ist es, durch den Zusammenhang von Brennraumdruck und dem Ladedruck bzw. dem Abgasgegendruck auf einen Ladedrucksensor bzw. einen Abgasgegendrucksensor verzichten zu können.

Die EP 2698521 beschreibt ein Verfahren zum Berücksichtigen zylinderindividueller Unterschiede. Zylindersignale der Zylinder werden dabei nicht auf einen gemeinsamen Sollwert nachgeführt, sondern es wird für jeden Zylinder ein passender Zylinder-Sollwert eingestellt, durch den die zylinderindividuellen Unterschiede von Zylinderparametern berücksichtigt werden können.

Die DE 10 2012 021778 zeigt ein Verfahren zur Kompensation von Liefergradabweichungen in einem Gemisch aufgeladenen Gasmotor, wobei eine den einzelnen Vorkammern zugeführte Brenngasmenge so angepasst wird, dass zylinderindividuelle oder zylinderbankindividuelle Liefergradabweichungen ausgeglichen werden.

Aufgabe der Erfindung ist es, die vorbeschriebenen Nachteile zu vermeiden und ein gegenüber dem Stand der Technik verbessertes Verfahren zum Betreiben einer Brennkraftmaschine bzw. eine entsprechend verbesserte Regelvorrichtung und Brennkraftmaschine anzugeben. Insbesondere soll durch das vorgeschlagene Verfahren ermöglicht werden, Änderungen der Luftmasse in den Brennräumen berücksichtigen zu können.

Diese Aufgabe wird bei einem erfindungsgemäßen Verfahren durch die Merkmale des Anspruchs 1 gelöst. Vorteilhafte Ausgestaltungen der Erfindung sind in den abhängigen Ansprüchen angegeben.

Gemäß der Erfindung ist also vorgesehen, dass der Zylinderdruckwert durch Änderung des Ladedrucks und / oder durch Änderung der Ladeluftmenge einem von einer Leistung der Brennkraftmaschine abhängigen Zylinderdrucksollwert nachgeführt wird.

Der Zylinderdruck in einem Brennraum bzw. Zylinder ist repräsentativ für die Luftmasse bzw. Zylinderfüllung in diesem Brennraum. Durch die Ermittlung des Zylinderdrucks im Brennraum kann daher auf die im Brennraum vorhandene Luftmasse rückgeschlossen werden.

Für das in dieser Anmeldung beschriebene Verfahren geeignete Sensoren müssen in der Lage sein, die Charakteristik der Verdichtungskurve, d.h. den Verlauf der Verdichtung vor der Zündung, und nicht bloß einen Spitzendruck aufzunehmen.

Denn durch die Zündung und die Entflammung des Gemisches wird die Verdichtungskurve natürlich von zusätzlichen Effekten überlagert. Um sinnvoll auf die im Brennraum vorhandene Luftmasse schließen zu können, wird die Charakteristik der Verdichtungskurve vor Verbrennung erfasst.

Der Zylinderdruck in einem Brennraum kann auf unterschiedliche Weisen ermittelt werden. Neben Zylinderdrucksensoren, die meist piezoelektrisch oder piezoresistiv funktionieren, kommen grundsätzlich auch andere Sensoren in Betracht.

Wenn in weiterer Folge von "Zylinderdruckmessungen" die Rede ist, so sind damit auch Messungen von Sensoren umfasst, die den Zylinderdruck nicht direkt bestimmen, sondern z.B. ein für den Zylinderdruck charakteristisches bzw. ein in den Zylinderdruck umrechenbares Signal erzeugen. Unter Sensoren sind für diese Anmeldung also alle Sensoren umfasst, die zur Bestimmung des Zylinderdrucks entsprechend der beschriebenen Anforderungen geeignet sind.

Es ist der besondere Vorteil der vorliegenden Erfindung, dass die Zielgröße der Regelung der Zylinderdruck (und nicht etwa der Ladedruck) ist und dieser Zylinderdrucksollwert aus der Leistung der Brennkraftmaschine abgeleitet wird. Damit gelingt eine Regelung der Brennkraftmaschine wesentlich besser als mit aus dem Stand der Technik bekannten Verfahren, denn wegen verschiedener Durchflusskoeffizienten im Gaswechsel und der Ventilsteuerung sind Ladedruck und Zylinderdruck nicht trivial ineinander umzurechnen.

Durch Regelung auf den von der Leistung abhängig gewählten Zylinderdruck brauchen diese Einflussgrößen nicht gesondert berücksichtigt werden, sondern die Regelung wirkt genau auf die für Emissionen maßgebliche Größe.

Für die Bestimmung der Luftmasse bzw. Zylinderfüllung gibt es mehrere Möglichkeiten.

So kann die Zylinderfüllung aus einem einzelnen Wert aus der Verdichtungslinie des Zylinderdrucks vor Zündung zu einer gewissen Position (z.B. 50 Grad Kurbelwinkel vor einem oberen Totpunkt (OT) eines den Brennraum begrenzenden Kolbens) bestimmt werden. Es können auch mehrere Werte gemittelt werden (z.B. 21 Werte aus einem Bereich von 50 Grad Kurbelwinkel bis 48 Grad Kurbelwinkel vor einem oberen Totpunkt des Kolbens mit einer Auflösungvon 0,1 Grad Kurbelwinkel).

Die Zylinderfüllung kann auch durch polytrope Extrapolation in den unteren Totpunkt oder einen anderen Punkt auf der Verdichtungslinie mittels folgender Polytropenbeziehung bestimmt werden:

$$p_1 = p_2 \cdot \left(\frac{V_2}{V_1}\right)^n$$

wobei n einen Polytropenexponent darstellt, der aus den Wärmeübergangsverhältnissen im Zylinder und der Gaszusammensetzung bestimmt wird und konstant gehalten wird, $V_1$ ein Volumen im Zylinder zu einem ersten Zeitpunkt (z.B. im unteren Totpunkt, bekannt aus den geometrischen Verhältnissen des Motors) darstellt, $V_2$ ein Volumen im Zylinder zu einem zweiten Zeitpunkt (z.B. 50 Grad Kurbelwinkel vor OT, bekannt aus den geometrischen Verhältnissen des Motors) darstellt, $p_2$ einen Druck im Zylinder zum zweiten Zeitpunkt aus einer Messung (z.B. bei 50 Grad Kurbelwinkel vor OT oder aus Mittelung von Messpunkten aus einem Bereich von 50 Grad Kurbelwinkel bis 48 Grad Kurbelwinkel vor OT) darstellt und $p_1$ einen berechneten Druck im Zylinder zum ersten Zeitpunkt darstellt.

Diese polytrope Extrapolation kann auch für mehrere Punkte auf der Verdichtungslinie durchgeführt werden. Der Median oder Mittelwert der Werte von $p_1$ kann dabei als Maß für die Zylinderfüllung verwendet werden.

Diese Methode kann auch so angewandt werden, dass die Abweichung zwischen einer berechneten und einer gemessenen Zylinderdruckkurve an diskreten Punkten, in einem Fenster oder über die gesamte Verdichtungsphase minimiert wird. Bei einem möglichen Verfahren wird aus einem zweiten Punkt (z.B. bei 50 Grad Kurbelwinkel vor OT) ein Startwert für den ersten Punkt (z.B. im unteren Totpunkt) berechnet. Aus der Polytropenbeziehung werden dann für ein definiertes Fenster (z.B. 90 bis 30 Grad Kurbelwinkel vor OT) Werte für $p_2$ in diesem Fenster berechnet und für jeden Wert die Abweichung zu dem gemessenen Wert bestimmt. Mit einem Optimierungsalgorithmus kann dann der Startwert für den ersten Punkt (z.B. im unteren Totpunkt) variiert werden, um die Abweichung zwischen den gemessenen und den berechneten Werten im definierten Fenster (z. B. 90 bis 30 Grad Kurbelwinkel vor OT) zu minimieren. Jener Wert für $p_1$, der die geringste Abweichung aufweist, kann als Kennwert für die Zylinderfüllung herangezogen werden.

Eine weitere Möglichkeit zur Bestimmung der Zylinderfüllung bietet die Prozessrechnung. Dabei kann aus der im Zylinder freigesetzten Energie (z.B. aus dem integrierten Heizgesetz) und einem Kennwert für das Brennstoff-Luft-Verhältnis die Luftmasse im Zylinder berechnet werden.

Abhängig von der Leistung der Brennkraftmaschine gibt es einen im Wesentlichen linearen Zusammenhang zwischen einem Zylinderdrucksollwert und der Leistung der Brennkraftmaschine unter der Vorgabe, im Wesentlichen konstante $NO_x$-Emissionen zu erzielen.

Dieser für jede Leistung der Brennkraftmaschine vorgebbare Zylinderdrucksollwert gilt beispielsweise für eine neue Brennkraftmaschine und kann bei Inbetriebnahme der Brennkraftmaschine entsprechend eingemessen und z.B. in einer Betriebskennlinie abgelegt werden.

Durch Verschleißerscheinungen kann sich jedoch über die Betriebsdauer der Brennkraftmaschine der jeweils aktuelle Wert des Zylinderdrucks verändern. Bei einer Abweichung des Zylinderdruckwerts vom Zylinderdruck-sollwert kann durch Änderung des Ladedrucks der Ladeluft und / oder Änderung der Ladeluftmenge der jeweilige Zylinderdruckwert dem vom jeweiligen Leistungspunkt der Brennkraftmaschine und dem jeweiligen Vorgabewert für $NO_x$-Emissionen abhängigen Zylinder-

drucksollwert nachgeführt werden, sodass trotz der Verschleißerscheinungen der Betriebspunkt der Brennkraftmaschine (Leistung und NO$_x$-Emissionen der Brennkraftmaschine) gehalten werden kann.

Durch Erhöhung des Ladedrucks der dem Brennraum zugeführten Ladeluft nimmt eine größere Luftmasse an der Verdichtung und Verbrennung teil, und der Zylinderdruck erreicht einen größeren Wert.

Wird die dem Brennraum zugeführte Ladeluftmenge erhöht, nimmt eine größere Luftmasse an der Verdichtung und Verbrennung teil, und der Zylinderdruck erreicht einen größeren Wert.

Der Begriff Ladeluft wird im Rahmen der vorliegenden Erfindung weit gefasst und umfasst beispielsweise ein Luft-Brennstoff-Gemisch (z.B. für Gemisch-aufgeladene Brennkraftmaschinen) oder im Wesentlichen nur Luft (z.B. für Luft-aufgeladene Brennkraftmaschinen).

Gemäß einer besonders bevorzugten Ausführungsform kann vorgesehen sein, dass der wenigstens eine Meßwert vor einer Zündung im Brennraum ermittelt wird, vorzugsweise in einem Bereich von etwa 30 bis 55 Grad Kurbelwinkel vor einem oberen Totpunkt eines den Brennraum begrenzenden Kolbens, besonders bevorzugt bei etwa 35 Grad Kurbelwinkel vor dem oberen Totpunkt des Kolbens oder bei etwa 49 Grad Kurbelwinkel vor dem oberen Totpunkt des Kolbens. Für die Ermittlung des Zylinderdruckwerts kann auch der gesamte zeitliche Verlauf des Zylinderdrucks während eines Verbrennungszyklus herangezogen werden. Es kann auch vorgesehen sein, dass mehrere diskrete Messpunkte für den Zylinderdruck während eines Verbrennungszyklus ermittelt werden und daraus der Zylinderdruckwert ermittelt wird. Da für die

Überwachung von Verbrennungsvorgängen häufig Zylinderdruckmessungen im Bereich von im Wesentlichen 49 Grad Kurbelwinkel vor dem oberen Totpunkt des Kolbens durchgeführt werden, kann gemäß einer bevorzugten Ausführungsform vorgesehen sein, diese Zylinderdruckmessungen für die Ermittlung des Zylinderdruckwerts heranzuziehen.

Besonders vorteilhaft ist jene Ausführungsform der Erfindung, bei der wenigstens zwei, vorzugsweise alle, Brennräume der Brennkraftmaschine jeweils mit einem Sensor, geeignet zur Bestimmung des Zylinderdrucks, ausgestattet sind, wobei jeweils aus wenigstens einem Meßwert eines Sensors ein zylinderindividueller Druckwert des betreffenden Brennraums ermittelt wird, wobei aus den zylinderindividuellen Druckwerten der Brennräume der Zylinderdruckwert ermittelt wird. Dabei kann vorzugsweise als Zylinderdruckwert der Median oder der arithmetische Mittelwert der ermittelten zylinderindividuellen Druckwerte der Brennräume ermittelt werden. Dadurch können Veränderungen in allen Brennräumen der Brennkraftmaschine in Bezug auf die in den Brennräumen vorhandene Luftmasse berücksichtigt werden.

Gemäß einer besonders bevorzugten Ausführung kann vorgesehen sein, dass der jeweilige Zylinderdrucksollwert aus einer Betriebskennlinie vorgegeben wird, die eine Zuordnung von Zylinderdrucksollwert zu Leistung der Brennkraftmaschine in Abhängigkeit von der Leistung der Brennkraftmaschine für im Wesentlichen konstante Werte für Stickoxidemissionen enthält. Die Betriebskennlinie bzw. leistungsabhängige Zylinderdrucksollwertkurve kann beispielsweise bei Inbetriebnahme durch Einmessen experimentell ermittelt werden, mit dem Ziel für jeweils unterschiedliche Werte der Leistung der Brennkraftmaschine im Wesentlichen konstante Werte für die NO$_x$-Emissionen zu erzielen.

Die Bestimmung des Zylinderdruckes erfolgt vorzugsweise in jedem Verdichtungszyklus, es jedoch auch vorgesehen sein, die Messung in Intervallen, beispielsweise nur jedes 10. Mal durchzuführen.

Dabei ist zu berücksichtigen, dass der bereits erläuterte, im Wesentlichen lineare Zusammenhang zwischen Zylinderdrucksollwert und Leistung der Brennkraftmaschine bei im Wesentlichen konstanten NO$_x$-Emissionen (Betriebskennlinie) nur für konstante Randbedingungen, wie beispielsweise Ladelufttemperatur; Luftfeuchte oder Zündzeitpunkt gilt. Daher können mehrere solcher Betriebskennlinien für verschiedene Randbedingungen, beispielsweise für unterschiedliche Ladelufttemperaturen, Luftfeuchten oder unterschiedliche Zündzeitpunkte, ermittelt werden (z.B. auch durch Korrekturfunktionen) und abgelegt werden. Es kann auch vorgesehen sein, dass die Betriebskennlinie gemäß entsprechender Korrekturfunktionen an die jeweiligen Randbedingungen angepasst wird.

Die Leistung oder ein Leistungsäquivalent der Brennkraftmaschine kann beispielsweise aus einer abgegebenen elektrischen Leistung eines mit der Brennkraftmaschine gekoppelten elektrischen Generators bestimmt werden. Sie kann auch in Form einer mechanischen Leistung aus Drehzahl und Drehmoment der Brennkraftmaschine oder aus elektrischer Leistung und Wirkungsgrad des Generators ermittelt werden. Wenn die Leistungsaufnahme des Verbrauchers über die Drehzahl der Brennkraftmaschine oder des Generators bekannt ist, kann sie auch über die Drehzahl ermittelt werden. Die Leistung oder ein Leistungsäquivalent der Brennkraftmaschine kann auch aus einem Median oder Mittelwert von zylinderindividuellen Leistungsbeiträgen (z.B. indizierte oder effektive Mitteldrücke in den Brennräumen der Brennkraftmaschine) in an sich bekannter Art und Weise bestimmt werden. Aus den Leistungsbeiträgen der Zylinder kann eine über alle Zylinder gemittelte Leistung berechnet und daraus ein Soll-Zylinderdruck bestimmt werden. Besteht eine Abweichung zu diesem Soll-Zylinderdruck, kann der Ladedruck verändert und so das Delta von Soll- zu Ist-Zylinderdruck minimiert werden. Alternativ kann aus dem für einen einzelnen Zylinder bestimmten Leistungsbeitrag ein zylinderindividueller Soll-Zylinderdruck bestimmt werden. Basierend darauf wird ein zylinderindividuell das Delta von Soll- zu Ist-Zylinderdruck minimiert. Diese Variante bietet sich an, wenn der Zylinderdruck zylinderindividuell regelbar ist, wie etwa bei einem variablen Ventiltrieb.

Besonders vorteilhaft ist jene Ausführungsform der Erfindung, bei der die Ladeluft über eine Luftzufuhrleitung dem wenigstens einen Brennraum zugeführt wird, wobei der Ladedruck durch Einstellen wenigstens einer in der Luftzufuhrleitung angeordneten Stelleinrichtung verändert wird, vorzugsweise durch Einstellen eines Verdichter-Bypassventils und/oder einer Drosselklappe. Dabei kann das Verdichter-Bypassventil zum Umgehung des Verdichters in einer Verdichterbypassleitung angeordnet sein, die einen Verdichtereingang mit einem Verdichterausgang verbindet.

Gemäß einer weiteren Ausführungsform kann vorgesehen sein, dass die wenigstens einem Brennraum zugeführte Ladeluftmenge über einen variablen Ventiltrieb verändert wird. Bei einem variablen Ventiltrieb können die Ventilöffnungszeiten und / oder die Ventilerhebungskurven und / oder die Spreizung von Ein- und Auslaßventilen verändert werden. Soll beispielsweise ein Zylinderdruck erhöht werden, kann der variable Ventiltrieb so beeinflusst werden, dass in dem betrachteten Füllvorgang wenigstens einem Zylinder eine größere Luftmenge zugeführt wird.

Gemäß einer weiteren Ausführungsform kann vorgesehen sein, dass die Ladeluft über eine mit einem Verdichter ausgestattete Luftzufuhrleitung dem wenigstens einen Brennraum zugeführt wird, wobei der Verdichter mit einer Abgasturbine in einer Abgasleitung der Brennkraftmaschine gekoppelt ist, wobei der Ladedruck durch Verstellen von Turbinenschaufeln der Abgasturbine oder durch Einstellen eines Abgasturbinen-Bypassventils in der Abgasleitung verändert wird, wobei das Abgasturbinen-Bypassventil zur Umgehung der Abgasturbine in einer Abgas-Bypassleitung angeordnet ist, die einen Abgasturbineneingang direkt mit einem Abgasturbinenausgang verbindet. Durch die mechanische Kopplung der Abgasturbine mit dem Verdichter wirken sich Änderungen, die die Drehzahl der Abgasturbine betreffen, auch auf die Drehzahl des Verdichters und damit auf den Ladedruck aus. Die verstellbaren Turbinenschaufeln der Abgasturbine können dabei als sogenannte variable Turbinengeometrie ausgebildet sein. Als Abgasturbinen-Bypassventil kann ein sogenanntes Waste-gate vorgesehen sein.

Gemäß einer besonders bevorzugten Ausführungsform kann vorgesehen sein, dass ein Brennstoff-Luft-Gemisch, welches die Ladeluft umfasst, in den wenigstens einen Brennraum eingebracht wird, wobei der Ladedruck durch Einstellen eines Brennstoff-Luft-Verhältnisses des Brennstoff-Luft-Gemischs verändert wird, indem bei und/oder nach Veränderung des Brennstoff-Luft-Verhältnisses des Brennstoff-Luft-Gemischs der Ladedruck der Ladeluft in Abhängigkeit von der Leistung der Brennkraftmaschine eingestellt wird.

Hierbei wird bei einer Abweichung des Zylinderdruckwerts vom Zylinderdrucksollwert das Brennstoff-Luft-Verhältnis des Brennstoff-Luft-Gemischs verändert. Durch diese Veränderung des Brennstoff-Luft-Verhältnisses würde sich ohne weitere Eingriffe eine veränderte Leistung der Brennkraftmaschine einstellen. Einer solchen unerwünschten Leistungsänderung wird entgegengewirkt, indem der Ladedruck der Ladeluft in Abhängigkeit von der Leistung der Brennkraftmaschine verändert wird, um die Leistung der Brennkraftmaschine im Wesentlichen konstant zu halten. Durch eine derartige Änderung des Ladedrucks der Ladeluft wird der Zylinderdruckwert dem Zylinderdrucksollwert nachgeführt. Das Ändern es Ladedrucks bzw. der Luftmasse der Ladeluft in Abhängigkeit von der Leistung der Brennkraftmaschine kann dabei durch einen im Stand der Technik bekannten Leistungsregler bewerkstelligt werden.

Insbesondere für Gemisch-aufgeladene Brennkraftmaschinen kann vorgesehen sein, dass als Brennstoff-Luft-Gemisch die Ladeluft über eine mit einem Mischer ausgestattete Luftzufuhrleitung dem wenigstens einen Brennraum zugeführt wird, wobei eine Brennstoffleitung zur Einbringung von Brennstoff und eine Luftleitung zur Einbringung von Luft in den Mischer münden und ein Mischerausgang des Mischers in die Luftzufuhrleitung mündet, wobei das Brennstoff-Luft-Verhältnis der Ladeluft durch Einstellen eines Mischer-Bypassventils verändert wird, wobei das Mischer-Bypassventil zur Umgehung des Mischers in einer die Luftleitung direkt mit dem Mischerausgang verbindenden Mischer-Bypassleitung angeordnet ist.

Es kann auch vorgesehen sein, dass das Brennstoff-Luft-Verhältnis der Ladeluft durch Einstellen eines in der Brennstoffleitung angeordneten Brennstoffventils verändert wird, wobei durch eine Änderung der Stellung des Brennstoffventils die dem Mischer über die Brennstoffleitung zugeführte Brennstoffmenge verändert wird.

Insbesondere für Luft-aufgeladene Brennkraftmaschinen kann vorgesehen sein, dass das Brennstoff-Luft-Gemisch die Ladeluft und einen Brennstoff umfasst, wobei die Ladeluft über eine Luftzufuhrleitung und der Brennstoff über eine mit wenigstens einem Brennstoffdosierventil ausgestattete Brennstoffzufuhrleitung dem wenigstens einen Brennraum zugeführt werden, wobei das Brennstoff-Luft-Verhältnis des Brennstoff-Luft-Gemischs durch Änderung einer Stellung des wenigstens einen Brennstoffdosierventils verändert wird. Bei dem wenigstens einen Brennstoffdosierventil kann es sich dabei um ein sogenanntes Port-Injection-Ventil handeln.

Schutz wird auch begehrt für eine Regelvorrichtung zum Regeln eines Zylinderdruckwerts einer mit wenigstens einem Brennraum ausgestatteten Brennkraftmaschine gemäß Anspruch 13.

Darüber hinaus wird Schutz begehrt für eine Brennkraftmaschine gemäß Anspruch 14. Vorteilhafte Ausgestaltungen der Brennkraftmaschine sind in den davon abhängigen Ansprüchen angegeben.

Bei einer vorgeschlagenen Regelvorrichtung zum Regeln eines Zylinderdruckwerts einer mit wenigstens einem Brennraum ausgestatteten Brennkraftmaschine, wobei über eine Luftzufuhrleitung der Brennkraftmaschine eine Ladeluft mit einem veränderbaren Ladedruck in den wenigstens einen Brennraum einbringbar ist, wobei der wenigstens eine Brennraum mit einem Sensor, geeignet zur Bestimmung des Zylinderdrucks, ausgestattet ist, wobei wenigstens ein Meßwert des Sensors über eine Signalleitung der Regelvorrichtung meldbar ist, wobei eine Leistungsmesseinrichtung zur Ermittlung einer Leistung der Brennkraftmaschine vorgesehen ist, wobei die Leistung über eine weitere Signalleitung der Regelvorrichtung meldbar ist, ist vorgesehen, dass die Regelvorrichtung aus dem wenigstens einen Meßwert des Sensors den Zylinderdruckwert ermittelt, wobei die Regeleinrichtung bei einer Abweichung des Zylinderdruckwerts von einem von der Leistung der Brennkraftmaschine abhängigen Zylinderdrucksollwert zum Ändern des Ladedrucks ein Stellsignal über eine Steuerleitung an wenigstens eine Stelleinrichtung meldet, bis der Zylinderdruckwert und der Zylinderdrucksollwert übereinstimmen, wobei vorzugsweise die wenigstens eine Stelleinrichtung in der Luftzufuhrleitung oder in einer Abgasleitung der Brennkraftmaschine angeordnet ist.

Eine vorgeschlagene Brennkraftmaschine weist wenigstens einen mit einem Zylinderdrucksensor ausgestatteten Brennraum sowie eine vorgeschlagene Regelvorrichtung auf. Als Stelleinrichtung kann beispielsweise in der Luftzufuhrleitung eine Drosselklappe oder ein Verdichter-Bypassventil vorgesehen sein.

Alternativ oder zusätzlich kann in einer Abgasleitung der Brennkraftmaschine als Stelleinrichtung eine mit einem Verdichter in der Luftzufuhrleitung gekoppelte Abgasturbine mit verstellbaren Turbinenschaufeln und/oder ein Abgasturbinen-Bypassventil zur Umgehung der Abgasturbine vorgesehen sein.

Insbesondere bei Gemisch-aufgeladenen Brennkraftmaschinen die mit einem Mischer in der Luftzufuhrleitung ausgestattet sind, kann als Stelleinrichtung ein Mischer-Bypassventil zur Umgehung des Mischers oder ein Brennstoffventil in einer in den Mischer mündenden Brennstoffleitung vorgesehen sein.

Insbesondere bei Luft-aufgeladenen Brennkraftmaschinen, bei denen Brennstoff über eine Brennstoffzufuhrleitung in den wenigstens einen Brennraum einbringbar ist, kann als Stelleinrichtung wenigstens ein Brennstoffdosierventil (z.B. Port-Injection-Ventil) in der Brennstoffzufuhrleitung angeordnet sein.

Weitere Einzelheiten und Vorteile der vorliegenden Erfindung werden anhand der nachfolgenden Figurenbeschreibung erläutert. Dabei zeigt bzw. zeigen:

Fig. 1      das Beispiel einer Betriebskennlinie zur Vorgabe eines Zylinderdrucksollwerts abhängig von der Leistung einer Brennkraftmaschine,

Fig. 2 - Fig. 8      Beispiele von verschiedenen Ausführungsformen der vorgeschlagenen Brennkraftmaschine in schematischen Blockschaltbildern und

Fig. 9      schematisch den Zylinderdruckverlauf eines Motors, aufgetragen als Diagramm von Brennraumdruck über Kurbelwinkel.

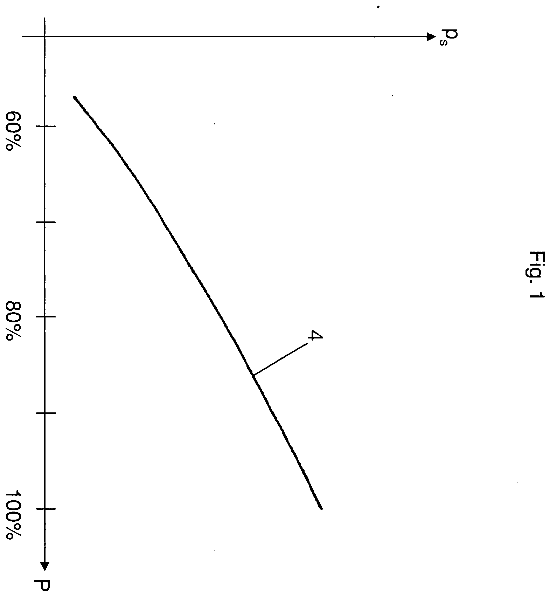

Figur 1 zeigt beispielhaft den Zusammenhang zwischen Zylinderdrucksollwert $p_s$ und Leistung P einer hier nicht gezeigten Brennkraftmaschine 1 unter der Vorgabe von im Wesentlichen konstanten $NO_x$-Emissionen der Brennkraftmaschine 1. Wie aus dieser Abbildung ersichtlich ist, besteht ein nahezu linearer Zusammenhang zwischen dem Zylinderdrucksollwert $p_s$ und der Leistung P der Brennkraftmaschine 1. Die Prozentangaben der Leistung P beziehen sich auf eine Nennleistung der Brennkraftmaschine 1, die als mit einem Generator gekoppelter stationärer Gasmotor ausgebildet sein kann.

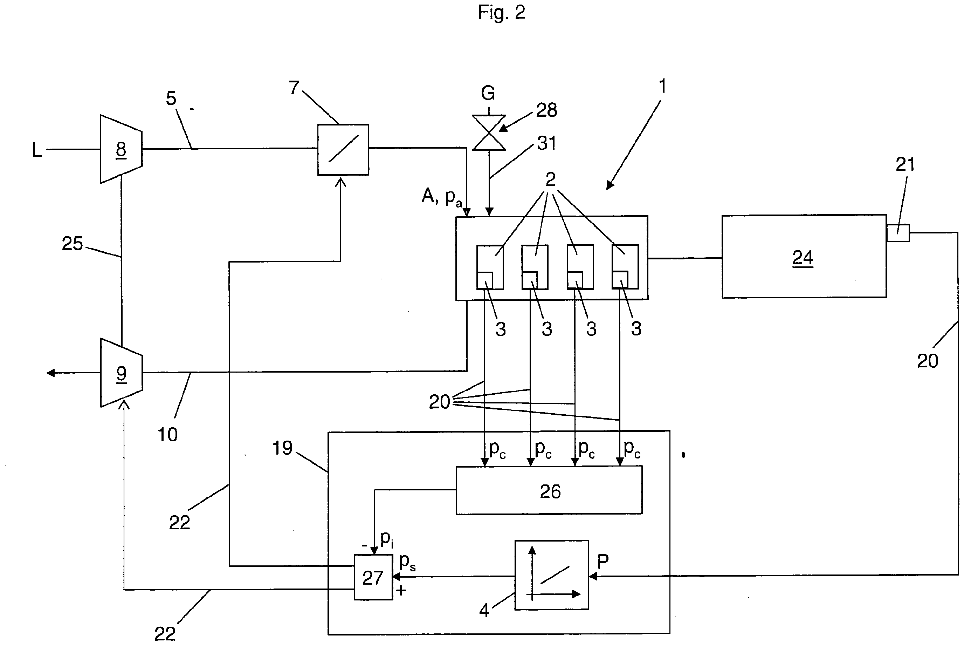

Figur 2 zeigt in einem schematischen Blockschaltbild eine Brennkraftmaschine 1, die in bekannter Weise mit einem elektrischen Generator 24 verbunden ist, wobei der Generator 24 elektrische Energie an ein mit dem Generator 24 verbundenes Energieversorgungsnetz (hier nicht gezeigt) abgeben kann. Die Brennkraftmaschine 1 weist in diesem Beispiel vier Brennräume 2 auf, die jeweils mit einem Sensor 3, geeignet zur Bestimmung des Zylinderdrucks, ausgestattet sind. Über eine Luftzufuhrleitung 5 werden die Brennräume 2 mit Ladeluft A versorgt. Im gezeigten Beispiel weist die Luftzufuhrleitung 5 einen Verdichter 8 auf, der in bekannter Art und Weise über eine Turboladerwelle 25 mit einer Abgasturbine 9 in einer Abgasleitung 10 der Brennkraftmaschine 1 verbunden ist.

In die Luftzufuhrleitung 5 wird in diesem Beispiel Luft L eingebracht, durch den Verdichter 8 verdichtet und den Brennräumen 2 als Ladeluft A mit einem Ladedruck $p_a$ zugeführt. Bei der gezeigten Brennkraftmaschine 1 handelt es sich um einen Luft-aufgeladenen Motor, bei dem den Brennräumen 2 zusätzlich zur Ladeluft A über eine Brennstoffzufuhrleitung 31 ein Brennstoff G in Form von Brenngas zugeführt wird. Dies kann beispielsweise durch entsprechende Brennstoffdosierventile 28 (z.B. Port-Injection-Ventile) erfolgen, die für jeden Brennraum 2 individuell eine gewünschte Brennstoffmenge dosieren können.

Daten $p_c$ der Sensoren 3 werden über entsprechende Signalleitungen 20 an eine Regelvorrichtung 19 gemeldet. Die Regelvorrichtung 19 weist in diesem Beispiel einen Istwertermittler 26 auf, der aus den gemeldeten Daten $p_c$ einen Zylinderdruckwert $p_i$ ermittelt, beispielsweise indem aus den Daten $p_c$ der Sensoren 3 jeweils zylinderindividuelle Druckwerte der Brennräume 2 ermittelt werden und als Zylinderdruckwert $p_i$ der Median oder der arithmetische Mittelwert der ermittelten zylinderindividuellen Druckwerte der Brennräume 2 ermittelt wird.

Die Leistung P der Brennkraftmaschine 1 wird in diesem Beispiel dadurch ermittelt, dass durch eine Leistungsmesseinrichtung 21 die vom Generator 24 abgegebene elektrische Leistung ermittelt und über eine Signalleitung 20 an die Regelvorrichtung 19 gemeldet wird. Die elektrische Leistung des Generators 24 entspricht im Wesentlichen der von der Brennkraftmaschine 1 abgegebenen Leistung P.

Über eine in der Regelvorrichtung 19 abgelegte Betriebskennlinie 4 wird der für den entsprechenden Leistungspunkt P der Brennkraftmaschine 1 vorgesehene Zylinderdrucksollwert $p_s$ ermittelt. Ein Regler 27 der Regelvorrichtung 19 ermittelt, ob eine Abweichung vom Zylinderdruckwert $p_i$ zum Zylinderdrucksollwert $p_s$ vorliegt. Falls eine solche Abweichung vorliegt, werden entsprechende Stellsignale über Steuerleitungen 22 an entsprechende Stelleinrichtungen gemeldet, wobei durch Einstellen der Stelleinrichtungen der Ladedruck $p_a$ solange verändert wird, bis der Zylinderdruckwert $p_i$ mit dem Zylinderdrucksollwert $p_s$ in Übereinstimmung ist.

Im gezeigten Beispiel ist als eine erste Stelleinrichtung eine Drosselklappe 7 in der Luftzufuhrleitung 5 vorgesehen, die mit einem entsprechenden Stellsignal über eine Steuerleitung 22 von der Regelvorrichtung 19 beaufschlagbar ist. Als weitere Stelleinrichtung ist vorgesehen, dass die Abgasturbine 9 des Turboladers über eine variable Turbinengeometrie verfügt, wobei von der Regelvorrichtung 19 ein entsprechendes Stellsignal über eine Steuerleitung 22 an die Abgasturbine 9 meldbar ist. Durch Änderung der Stellung der Drosselklappe 7 und/oder durch Änderung der Turbinengeometrie der Abgasturbine 9 kann somit eine entsprechende Veränderung des Ladedrucks $p_a$ erzielt werden, bis der Zylinderdruckwert $p_i$ und der Zylinderdrucksollwert $p_s$ übereinstimmen.

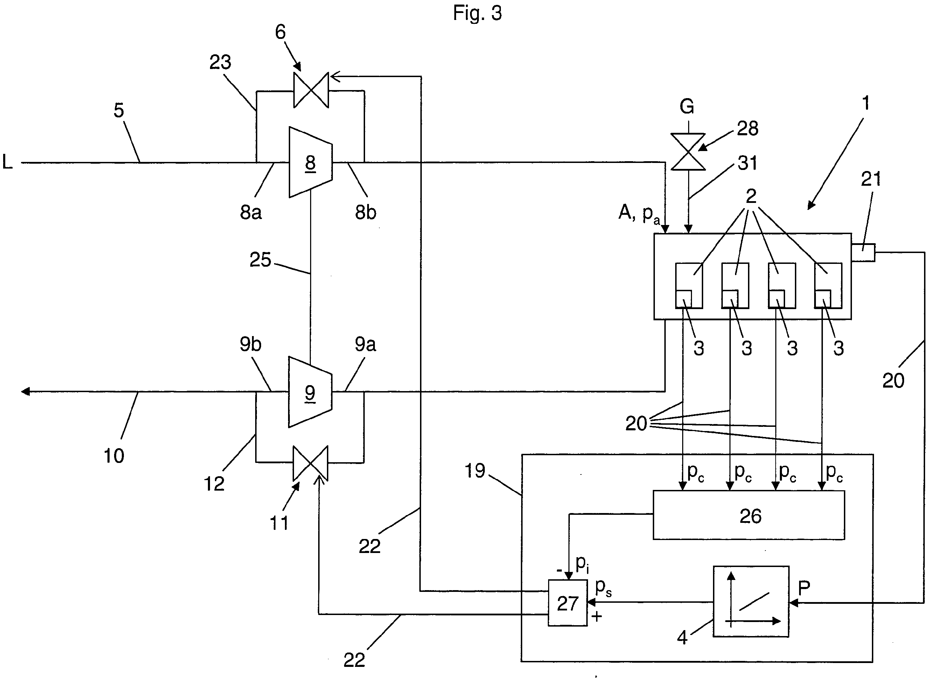

Figur 3 zeigt ein weiteres Beispiel einer vorgeschlagenen Brennkraftmaschine 1, wobei in diesem Beispiel die Leistung P der Brennkraftmaschine 1 durch eine an der Brennkraftmaschine 1 angeordnete Leistungsmesseinrichtung 21 unmittelbar an der Brennkraftmaschine 1 ermittelt und über eine Signalleitung 20 an die Regelvorrichtung 19 gemeldet wird. Die Luftzufuhrleitung 5 weist in diesem Beispiel keine Drosselklappe 7 auf, jedoch ist hier als Stelleinrichtung ein Verdichterbypassventil 6 zur Umgehung des Verdichters 8 in einer Verdichterbypassleitung 23 angeordnet, die einen Verdichtereingang 8a direkt mit einem Verdichterausgang 8b verbindet. Zum Ändern einer Ventilstellung des Verdichter-Bypassventils 6 ist ein Stellsignal von der Regelvorrichtung 19 über eine Steuerleitung 22 an das Verdichterbypassventil 6 meldbar. Abgasseitig ist in diesem Beispiel als weitere Stelleinrichtung ein Abgasturbinenbypassventil 11 zur Umgehung der Abgasturbine 9 in einer Abgasbypassleitung 12 vorgesehen, die einen Abgasturbineneingang 9a direkt mit einem Abgasturbinenausgang 9b verbindet, wobei zum Ändern einer Ventilstellung des Abgasturbinen-Bypassventils 11 ein Stellsignal von der Regelvorrichtung 19 über eine Steuerleitung 22 an das Abgasturbinenbypassventil 11 meldbar ist.

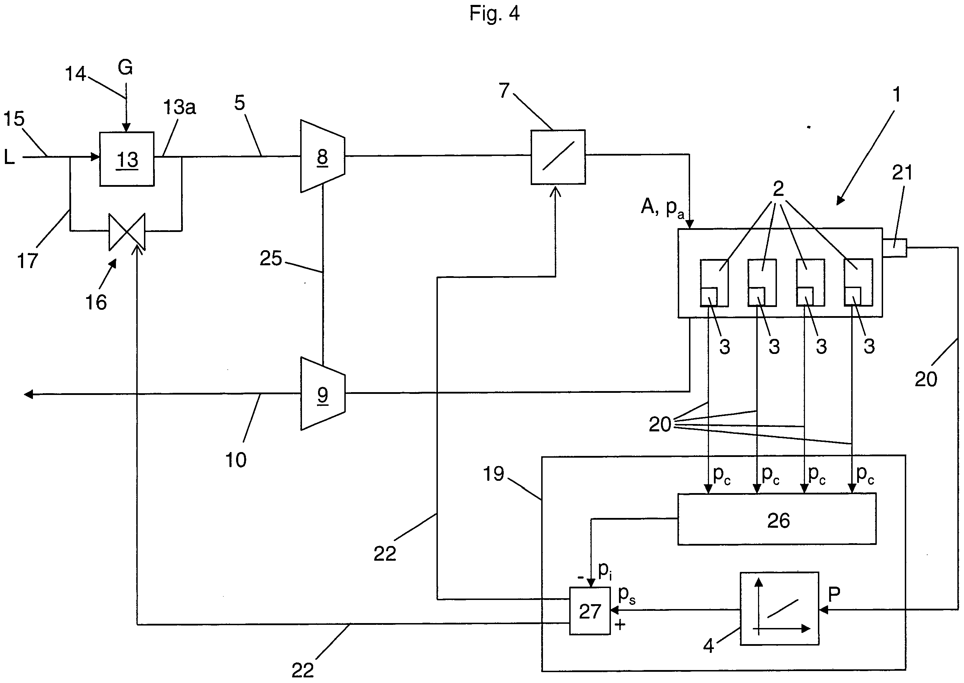

Figur 4 zeigt ein weiteres Beispiel einer vorgeschlagenen Brennkraftmaschine 1 in einem schematischen Blockschaltbild. In diesem Beispiel handelt es sich bei der Brennkraftmaschine 1 um einen Gemisch-aufgeladenen Gasmotor, bei dem die Luftzufuhrleitung 5 mit einem Mischer 13 ausgestattet ist. In den Mischer 13 münden eine Brennstoffleitung 14 zur Einbringung von Brennstoff G und eine Luftleitung 15 zur Einbringung von Luft L. Ein Mischerausgang 13a des Mischers 13 mündet in die Luftzufuhrleitung 5, über die das aus dem Mischerausgang 13a austretende Brennstoff-Luft-Gemisch als Ladeluft A in die Brennräume 2 eingebracht wird. Als Stelleinrichtung ist in diesem Beispiel ein Mischerbypassventil 16 zur Umgehung des Mischers 19 in einer die Luftleitung 15 direkt mit dem Mischerausgang 13a verbindenden Mischerbypassleitung 17 angeordnet, wobei zum Ändern einer Ventilstellung des Mischer-Bypassventils 16 ein Stellsignal von der Regelvorrichtung 19 über eine Steuerleitung 22 an das Mischerbypassventil 16 meldbar ist. Zusätzlich ist als weitere Stelleinrichtung eine Drosselklappe 7 in der Luftzufuhrleitung 5 angeordnet, wobei zum Ändern einer Stellung der Drosselklappe 7 ein Stellsignal von der Regelvorrichtung 19 über eine Steuerleitung 22 an die Drosselklappe 7 meldbar ist.

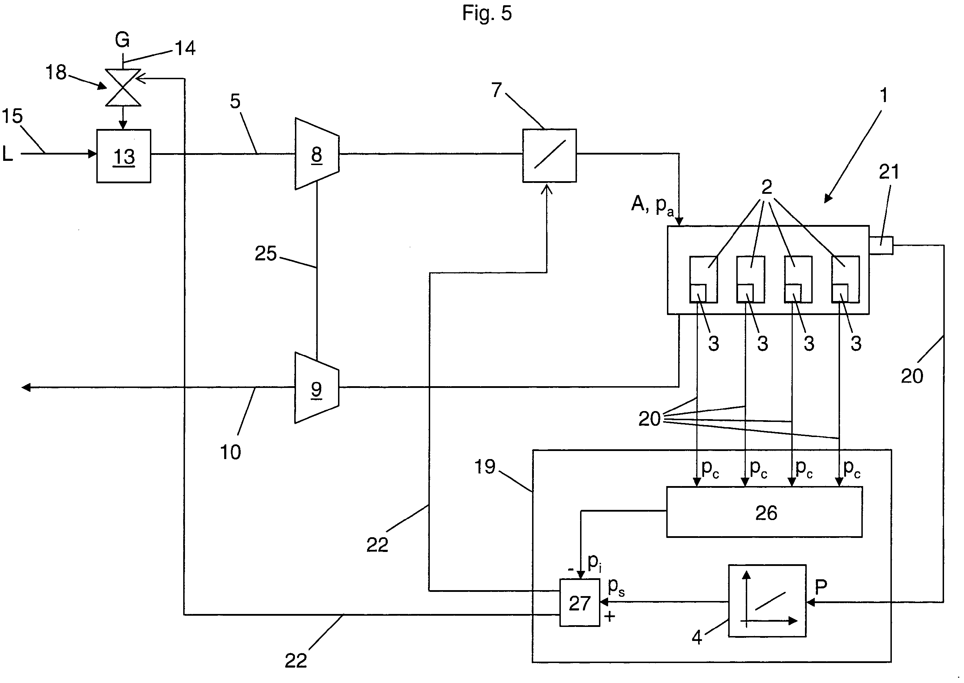

Figur 5 zeigt ein weiteres Beispiel einer als Gemisch-aufgeladener Gasmotor ausgebildeten Brennkraftmaschine 1, bei der die Luftzufuhrleitung 5 mit einem Mischer 13 ausgestattet ist. In diesem Beispiel ist in der Brennstoffleitung 14 als Stelleinrichtung ein Brennstoffventil 18 angeordnet, wobei zum Ändern einer Ventilstellung des Brennstoffventils 18 ein Stellsignal von der Regelvorrichtung 19 über eine Steuerleitung 22 an das Brennstoffventil 18 meldbar ist.

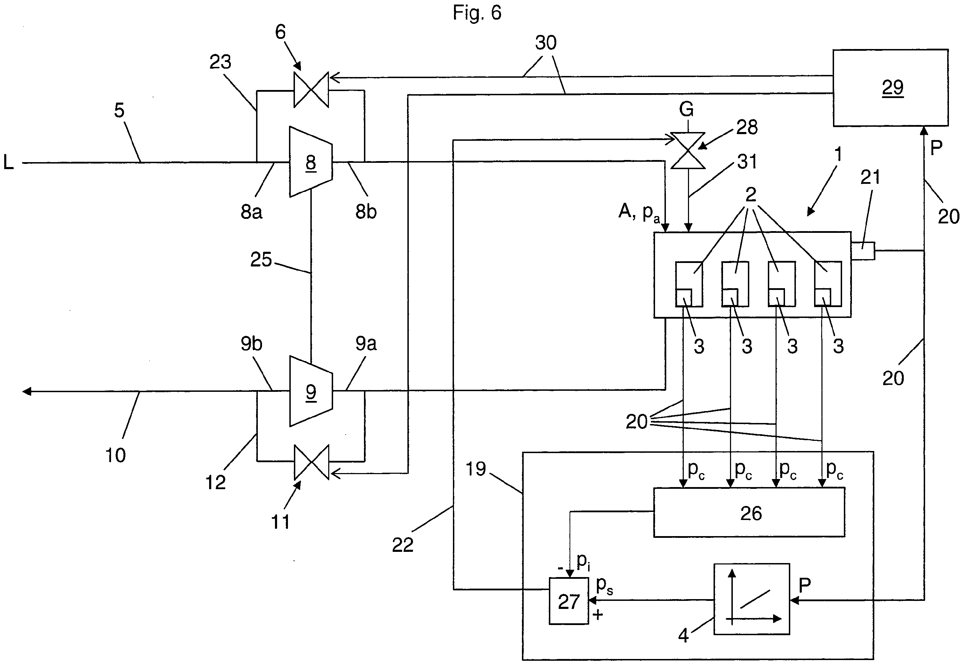

Figur 6 zeigt ein weiteres Beispiel einer Luftaufgeladenen Brennkraftmaschine 1. Den Brennräumen 2 der Brennkraftmaschine 1 werden Ladeluft A in Form von verdichteter Luft L über eine Luftzufuhrleitung 5 und Brennstoff G über eine Brennstoffzufuhrleitung 31 zugeführt. Zur Dosierung des Brennstoffs G ist die Brennstoffzufuhrleitung 31 mit wenigstens einem Brennstoffdosierventil 28 ausgestattet. Vorzugsweise kann vorgesehen sein, dass für jeden Brennraum 2 jeweils ein Brennstoffdosierventil 28 vorgesehen ist, um eine zylinderindividuelle Brennstoffdosierung zu ermöglichen.

Der Übersichtlichkeit halber wurde in den Figuren nur ein Brennstoffdosierventil 28 gezeigt, üblicherweise ist natürlich jedem Zylinder mindestens ein solches Brennstoffdosierventil zugeordnet.

Den Brennräumen 2 wird also ein Brennstoff-Luft-Gemisch umfassend die Ladeluft A und den Brennstoff G zugeführt. In diesem Beispiel stellt das wenigstens eine Brennstoffdosierventil 28 die Stelleinrichtung dar, wobei zum Ändern einer Ventilstellung des wenigstens einen Brennstoffdosierventils 28 ein Stellsignal von der Regelvorrichtung 19 über eine Steuerleitung 22 an das wenigstens eine Brennstoffdosierventil 28 meldbar ist.

Bei einer Abweichung des Zylinderdruckwerts $p_i$ vom Zylinderdrucksollwert $p_s$ wird durch diese Stelleinrichtung das Brennstoff-Luft-Verhältnis des Brennstoff-Luft-Gemischs verändert. Durch diese Veränderung des Brennstoff-Luft-Verhältnisses würde sich ohne weitere Eingriffe eine veränderte Leistung P der Brennkraftmaschine 1 einstellen. Ein in diesem Beispiel vorgesehener Leistungsregler 29 erfasst die von einer Leistungsmesseinrichtung 21 über eine Signalleitung 20 gemeldete Leistung P der Brennkraftmaschine 1 und wirkt einer Leistungsänderung entgegen, indem er über entsprechende Leitungen 30 Stellsignale an ein Verdichter-Bypassventil 6 und/oder ein Abgasturbinen-Bypassventil 11 meldet. Durch eine Änderung der Ventilstellung von Verdichter-Bypassventil 6 und/oder ein Abgasturbinen-Bypassventil 11 wird der Ladedruck $p_a$ der Ladeluft A verändert. Durch eine derartige Änderung des Ladedrucks $p_a$ der Ladeluft A wird der Zylinderdruckwert $p_i$ dem Zylinderdrucksollwert $p_s$ nachgeführt.

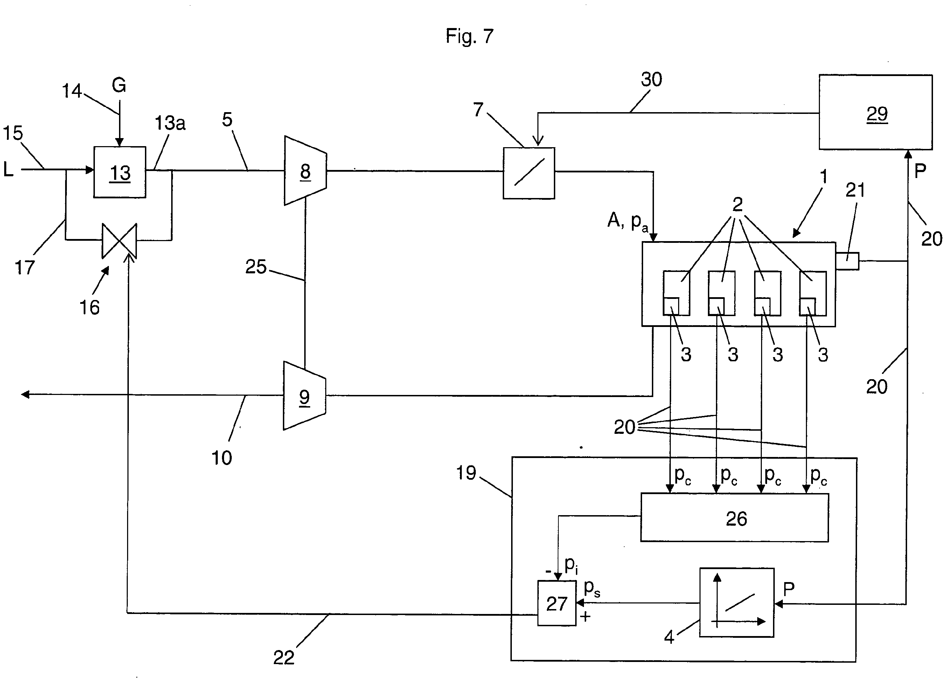

Figur 7 zeigt ein weiteres Beispiel einer Gemisch-aufgeladenen Brennkraftmaschine 1, die ähnlich wie die Brennkraftmaschine 1 der Figur 6 mit einem Leistungsregler 29 ausgestattet ist.

Die den Brennräumen 2 über die Luftzufuhrleitung 5 zugeführte Ladeluft A ist in diesem Beispiel ein in einem Mischer 13 gebildetes Brennstoff-Luft-Gemisch, das Luft L und Brennstoff G umfasst. Der Mischer 13 ist in der Luftzufuhrleitung 5 angeordnet, wobei eine Brennstoffleitung 14 zur Einbringung des Brennstoffs G und eine Luftleitung 15 zur Einbringung der Luft L in den Mischer 13 münden und ein Mischerausgang 13a des Mischers 13 in die Luftzufuhrleitung 5 mündet.

Ähnlich dem Prinzip gemäß Figur 6 wird bei einer Abweichung des Zylinderdruckwerts $p_i$ vom Zylinderdrucksollwert $p_s$ das Brennstoff-Luft-Verhältnis des Brennstoff-Luft-Gemischs in Form der Ladeluft A verändert. Dies erfolgt hierbei durch eine Änderung der Ventilstellung eines Mischer-Bypassventils 16, das zur Umgehung des Mischers 13 in einer die Luftleitung 15 direkt mit dem Mischerausgang 13a verbindenden Mischer-Bypassleitung 17 angeordnet ist.

Durch diese Veränderung des Brennstoff-Luft-Verhältnisses der Ladeluft A würde sich ohne weitere Eingriffe eine veränderte Leistung P der Brennkraftmaschine 1 einstellen. Der Leistungsregler 29 wirkt in diesem Beispiel einer solchen Leistungsänderung entgegen, indem er über eine entsprechende Leitung 30 ein Stellsignal an eine in der Luftzufuhrleitung 5 angeordnete Drosselklappe 7 meldet. Durch eine Änderung der Stellung der Drosselklappe 7 wird eine Luftmasse der Ladeluft A bzw. der Ladedruck $p_a$ der Ladeluft A verändert. Durch eine derartige Änderung des Ladedrucks $p_a$ der Ladeluft A wird der Zylinderdruckwert $p_i$ dem Zylinderdrucksollwert $p_s$ nachgeführt.

Durch die vorbeschriebenen Steuereingriffe auf die Stelleinrichtungen - in Form von Stellsignalen von der Regelvorrichtung 19 an die Stelleinrichtungen - kann der Ladedruck $p_a$ derart und so lange verändert werden, bis der Zylinderdruckwert $p_i$ und der Zylinderdrucksollwert $p_s$ übereinstimmen, sodass trotz Abweichungen der Luftmasse in den Brennräumen 2 aufgrund von . Verschleißerscheinungen von Bauteilen der Brennkraftmaschine 1 ein gewünschter Betriebspunkt der Brennkraftmaschine 1 in Bezug auf Leistung P und $NO_x$-Emissionen gehalten werden kann.

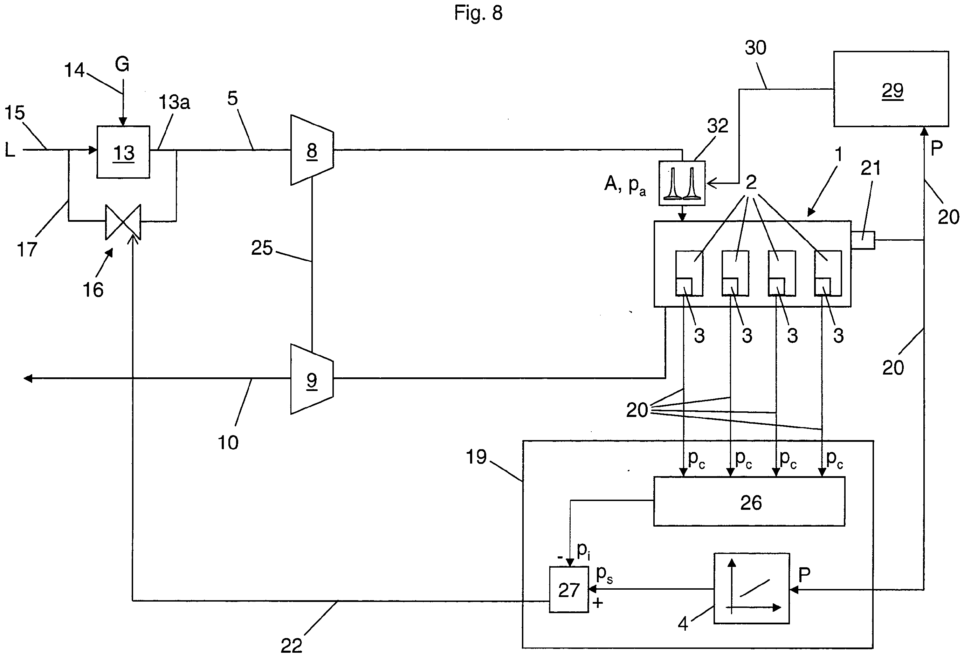

Figur 8 zeigt ein weiteres Beispiel einer Gemisch-aufgeladenen Brennkraftmaschine 1, die wie die Brennkraftmaschine 1 der Figur 7 mit einem Leistungsregler 29 ausgestattet ist. In diesem Beispiel ist als Stelleinrichtung ein variabler Ventiltrieb 32 vorgesehen, über den die dem wenigstens einem Brennraum zugeführte Luftmenge variierbar ist.

Ein Leistungsregler 29 erfasst die von einer Leistungsmesseinrichtung 21 über eine Signalleitung 20 gemeldete Leistung P der Brennkraftmaschine 1 und wirkt einer Leistungsänderung entgegen, indem er über Signalleitungen 30 Stellsignale an den variablen Ventiltrieb 32 meldet. Bei dem variablen Ventiltrieb 32 können die Ventilöffnungszeiten und / oder die Ventilerhebungskurven und / oder die Spreizung von Ein- und Auslaßventilen verändert und dadurch die Menge (das Volumen) an in den Brennraum einströmender Ladeluft A variiert werden. Muss z.B. die von der Brennkraftmaschine 1 abgegebene Leistung erhöht werden, meldet der Leistungsregler 29 ein Signal an den variablen Ventiltrieb 32, dass die Menge der in wenigstens einen der Brennräume 2 einzulassenden Ladeluft A erhöht werden muss.

Wird die einem Brennraum zugeführte Ladeluftmenge erhöht, nimmt eine größere Luftmasse an der Verdichtung und Verbrennung teil, und der Zylinderdruck $p_i$ erreicht einen größeren Wert.

Die Einstellung des variablen Ventiltriebs 32 wird solange verändert, bis der Zylinderdruckwert $p_i$ mit dem Zylinderdrucksollwert $p_s$ in Übereinstimmung ist. Ein variabler Ventiltrieb 32 kann für alle zuvor gezeigten Konfigurationen vorgesehen sein. Figur 8 zeigt also nur eine mögliche Variante. Vorteilhafterweise kann bei Einsatz eines variablen Ventiltriebs 32 auf eine Drosselklappe verzichtet werden.

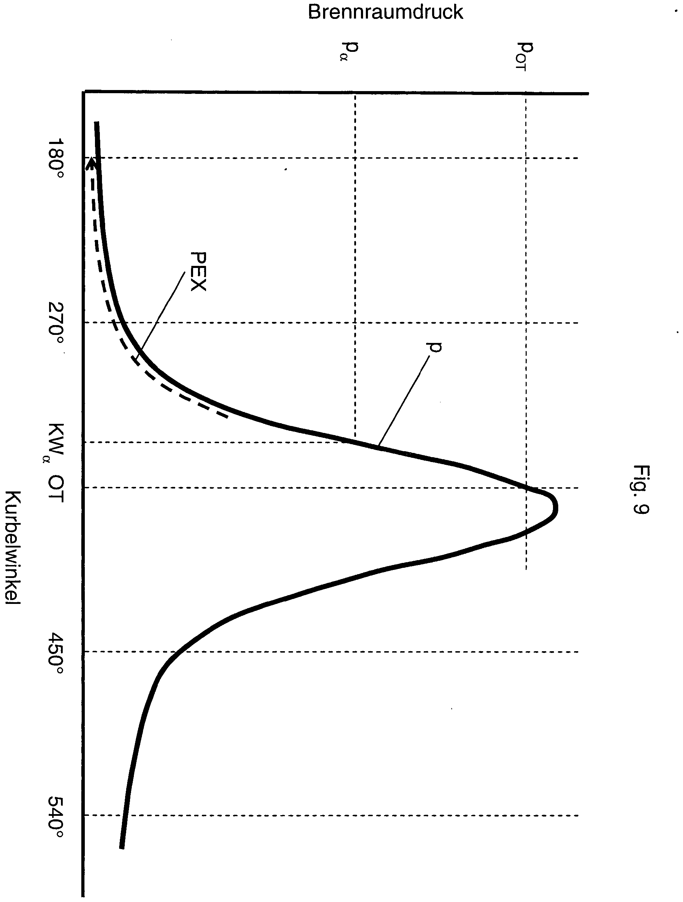

Figur 9 zeigt schematisch den Zylinderdruckverlauf eines Motors, aufgetragen als Diagramm von Brennraumdruck als Ordinate über Kurbelwinkel als Abszisse. Die Winkellagen und der Druckverlauf entsprechen nicht notwendigerweise realen Gegebenheiten, sondern sollen lediglich die eingangs beschriebenen Verfahren zur Ermittlung der Zylinderfüllung illustrieren. Dabei stellen dar:

| | |
|---|---|
| p | Verlauf des Zylinderdruckes |
| OT | Kurbelwinkel beim oberen Totpunkt |
| $p_{OT}$ | Zylinderdruck beim Oberen Totpunkt |
| $p_\alpha$ | Zylinderdruck bei einem ersten Kurbelwinkel $KW_\alpha$ |
| PEX | Beispielhafter Verlauf einer polytropen Extrapolation |

Die strichlierte Linie PEX zeigt einen beispielhaften Verlauf einer polytropen Extrapolation. Wie in der Beschreibung eingangs erläutert, kann aus einem Messwert für einen Zylinderdruck bzw. einer Mittelung aus mehreren Werten aus einem Kurbelwinkelbereich über polytrope Extrapolation auf einen beliebigen Punkt der Verdichtungskurve gerechnet werden. Die Kurve PEX ist für bessere Unterscheidbarkeit bewusst etwas vom Zylinderdruckverlauf abgesetzt gezeichnet, verläuft aber natürlich deckungsgleich mit dem Zylinderdruckverlauf.

**Patentansprüche**

1. Verfahren zum Betreiben einer Brennkraftmaschine (1), insbesondere eines Gasmotors, mit wenigstens einem Brennraum (2), dem eine Ladeluft (A) mit einem veränderbaren Ladedruck ($p_a$) und / oder einer veränderbaren Ladeluftmenge zugeführt wird, wobei aus wenigstens einem Meßwert ($p_c$) eines im wenigsten einen Brennraum (2) angeordneten Sensors (3) ein Zylinderdruckwert ($p_i$) ermittelt wird, **dadurch gekennzeichnet, dass** der Zylinderdruckwert ($p_i$) durch Änderung des Ladedrucks ($p_a$) und / oder durch Änderung der Ladeluftmenge als Stellgröße(n) auf einen Zylinderdrucksollwert ($p_s$) geregelt wird, wobei der Zylinderdrucksollwert ($p_s$) von einer Leistung (P) der Brennkraftmaschine (1) abhängig gewählt wird, wobei der wenigstens eine Meßwert ($p_c$) vor einer Zündung im Brennraum (2) ermittelt wird, vorzugsweise in einem Bereich von etwa 30 bis 55 Grad Kurbelwinkel vor einem oberen Totpunkt eines den Brennraum (2) begrenzenden Kolbens, besonders bevorzugt bei etwa 35 Grad Kurbelwinkel vor dem oberen Totpunkt des Kolbens oder bei etwa 49 Grad Kurbelwinkel vor dem oberen Totpunkt des Kolbens.

2. Verfahren nach Anspruch 1, **dadurch gekennzeichnet, dass** wenigstens zwei, vorzugsweise alle, Brennräume (2) der Brennkraftmaschine (1) jeweils mit einem Sensor (3) zur Bestimmung des Zylinderdruckes ausgestattet sind, wobei jeweils aus wenigstens einem Meßwert ($p_c$) eines Sensors (3) ein zylinderindividueller Druckwert des betreffenden Brennraums (2) ermittelt wird, wobei aus den zylinderindividuellen Druckwerten der Brennräume (2) der Zylinderdruckwert ($p_i$) ermittelt wird.

3. Verfahren nach Anspruch 2, **dadurch gekennzeichnet, dass** als Zylinderdruckwert ($p_i$) der Median oder der arithmetische Mittelwert der ermittelten zylinderindividuellen Druckwerte der Brennräume (2) ermittelt wird.

4. Verfahren nach einem der Ansprüche 1 bis 3, **dadurch gekennzeichnet, dass** der jeweilige Zylinderdrucksollwert ($p_s$) aus einer Betriebskennlinie (4) vorgegeben wird, die eine Zuordnung von Zylinderdrucksollwert ($p_s$) zu Leistung (P) der Brennkraftmaschine (1) in Abhängigkeit von der Leistung (P) der Brennkraftmaschine (1) für im Wesentlichen konstante Werte für Stickoxidemissionen enthält.

5. Verfahren nach einem der Ansprüche 1 bis 4, **dadurch gekennzeichnet, dass** die Ladeluft (A) über eine Luftzufuhrleitung (5) dem wenigstens einen Brennraum (2) zugeführt wird, wobei der Ladedruck ($p_a$) durch Einstellen wenigstens einer in der Luftzufuhrleitung (5) angeordneten Stelleinrichtung (6, 7) verändert wird, vorzugsweise durch Einstellen eines Verdichter-Bypassventils (6) und/oder einer Drosselklappe (7).

6. Verfahren nach einem der Ansprüche 1 bis 5, **dadurch gekennzeichnet, dass** die Ladeluft (A) über eine Luftzufuhrleitung (5) dem wenigstens einen Brennraum (2) zugeführt wird, wobei die Ladeluftmenge durch Einstellen eines variablen Ventiltriebs (32) verändert wird.

7. Verfahren nach einem der Ansprüche 1 bis 6, **dadurch gekennzeichnet, dass** die Ladeluft (A) über eine mit einem Verdichter (8) ausgestattete Luftzufuhrleitung (5) dem wenigstens einen Brennraum (2) zugeführt wird, wobei der Verdichter (8) mit einer Abgasturbine (9) in einer Abgasleitung (10) der Brennkraftmaschine (1) gekoppelt ist, wobei der Ladedruck ($p_a$) durch Verstellen von Turbinenschaufeln der Abgasturbine (9) oder durch Einstellen eines Abgasturbinen-Bypassventils (11) in der Abgasleitung (10) verändert wird, wobei das Abgasturbinen-Bypassventil (11) zur Umgehung der Abgasturbine (9) in einer Abgas-Bypassleitung (12) angeordnet ist, die einen Abgasturbineneingang (9a) direkt mit einem Abgasturbinenausgang (9b) verbindet.

8. Verfahren nach einem der Ansprüche 1 bis 7, **dadurch gekennzeichnet, dass** ein Brennstoff-Luft-Gemisch umfassend die Ladeluft (A) in den wenigstens einen Brennraum (2) eingebracht wird, wobei der Ladedruck ($p_a$) durch Einstellen eines Brennstoff-Luft-Verhältnisses des Brennstoff-Luft-Gemischs verändert wird, indem bei und/oder nach Veränderung des Brennstoff-Luft-Verhältnisses des Brennstoff-Luft-Gemischs der Ladedruck ($p_a$) der Ladeluft (A) in Abhängigkeit von der Leistung (P) der Brennkraftmaschine (1) eingestellt wird.

9. Verfahren nach Anspruch 8, **dadurch gekennzeichnet, dass** als Brennstoff-Luft-Gemisch die Ladeluft (A) über eine mit einem Mischer (13) ausgestattete Luftzufuhrleitung (5) dem wenigstens einen Brennraum (2) zugeführt wird, wobei eine Brennstoffleitung (14) zur Einbringung von Brennstoff (G) und eine Luftleitung (15) zur Einbringung von Luft (L) in den Mischer (13) münden und ein Mischerausgang (13a) des Mischers (13) in die Luftzufuhrleitung (5) mündet, wobei das Brennstoff-Luft-Verhältnis der Ladeluft (A) durch Einstellen eines Mischer-Bypassventils (16) verändert wird, wobei das Mischer-Bypassventil (16) zur Umgehung des Mischers (13) in einer die Luftleitung (15) direkt mit dem Mischerausgang (13a) verbindenden Mischer-Bypassleitung (17) angeordnet ist.

10. Verfahren nach Anspruch 8 oder 9, **dadurch gekennzeichnet, dass** als Brennstoff-Luft-Gemisch die Ladeluft (A) über eine mit einem Mischer (13) ausgestattete Luftzufuhrleitung (5) dem wenigstens einen Brennraum (2) zugeführt wird, wobei eine Brennstoffleitung (14) zur Einbringung von Brennstoff (G) und eine Luftleitung (15) zur Einbringung von Luft (L) in den Mischer (13) münden und ein Mischerausgang (13a) des Mischers (13) in die Luftzufuhrleitung (5) mündet, wobei das Brennstoff-Luft-Verhältnis der Ladeluft (A) durch Einstellen eines in der Brennstoffleitung (14) angeordneten Brennstoffventils (18) verändert wird, wobei durch eine Änderung der Stellung des Brennstoffventils (18) die dem Mischer (13) über die Brennstoffleitung (14) zugeführte Brennstoffmenge verändert wird.

11. Verfahren nach Anspruch 8, **dadurch gekennzeichnet, dass** das Brennstoff-Luft-Gemisch die Ladeluft (A) und einen Brennstoff (G) umfasst, wobei die Ladeluft (A) über eine Luftzufuhrleitung (5) und der Brennstoff (G) über eine mit wenigstens einem Brennstoffdosierventil (28) ausgestattete Brennstoffzufuhrleitung (31) dem wenigstens einen Brennraum (2) zugeführt werden, wobei das Brennstoff-Luft-Verhältnis des Brennstoff-Luft-Gemischs durch Änderung einer Stellung des wenigstens einen Brennstoffdosierventils (28) verändert wird.

12. Regelvorrichtung (19) zum Regeln eines Zylinderdruckwerts (p$_i$) einer mit wenigstens einem Brennraum (2) ausgestatteten Brennkraftmaschine (1), wobei über eine Luftzufuhrleitung (5) der Brennkraftmaschine (1) eine Ladeluft (A) mit einem veränderbaren Ladedruck (p$_a$) und / oder einer veränderbaren Ladeluftmenge in den wenigstens einen Brennraum (2) einbringbar ist, wobei der wenigstens eine Brennraum (2) mit einem Sensor (3) zur Bestimmung des Zylinderdruckes ausgestattet ist, wobei wenigstens ein Meßwert (p$_c$) des Sensors (3) über eine Signalleitung (20) der Regelvorrichtung (19) meldbar ist, wobei eine Leistungsmesseinrichtung (21) zur Ermittlung einer Leistung (P) der Brennkraftmaschine (1) vorgesehen ist, wobei die Leistung (P) über eine weitere Signalleitung (20) der Regelvorrichtung (19) meldbar ist, **dadurch gekennzeichnet, dass** der wenigstens eine Meßwert (p$_c$) vor einer Zündung im Brennraum (2) ermittelt wird, wobei die Regelvorrichtung (19) aus dem wenigstens einen Meßwert (p$_c$) des Sensors (3) den Zylinderdruckwert (p$_i$) ermittelt, wobei die Regeleinrichtung (19) bei einer Abweichung des Zylinderdruckwerts (p$_i$) von einem von der Leistung (P) der Brennkraftmaschine (1) abhängigen Zylinderdrucksollwert (p$_s$)

   - zum Ändern des Ladedrucks (p$_a$) ein Stellsignal über eine Steuerleitung (22) an wenigstens eine Stelleinrichtung (6, 7, 11, 16, 18, 28) meldet, bis der Zylinderdruckwert (p$_i$) und der Zylinderdrucksollwert (p$_s$) übereinstimmen, wobei vorzugsweise die wenigstens eine Stelleinrichtung (6, 7, 11, 16, 18, 28) in der Luftzufuhrleitung (5) oder in einer Abgasleitung (10) der Brennkraftmaschine (1) angeordnet ist und / oder
   - zum Ändern der Ladeluftmenge ein Stellsignal über eine Steuerleitung (22) an einen variablen Ventiltrieb (32) meldet, bis der Zylinderdruckwert (p$_i$) und der Zylinderdrucksollwert (p$_s$) übereinstimmen.

13. Brennkraftmaschine (1), insbesondere Gasmotor, mit wenigstens einem mit einem Sensor (3) zur Bestimmung des Zylinderdruckes ausgestatteten Brennraum (2) und mit einer Regelvorrichtung (19) nach Anspruch 12

14. Brennkraftmaschine nach Anspruch 13, **dadurch gekennzeichnet, dass** in der Luftzufuhrleitung (5) als Stelleinrichtung eine Drosselklappe (7) angeordnet ist, wobei zum Ändern einer Stellung der Drosselklappe (7) ein Stellsignal von der Regelvorrichtung (19) über eine Steuerleitung (22) an die Drosselklappe (7) meldbar ist.

15. Brennkraftmaschine nach Anspruch 13 oder 14, **dadurch gekennzeichnet, dass** in der Luftzufuhrleitung (5) ein Verdichter (8) zum Verdichten der Ladeluft (A) angeordnet ist, wobei der Verdichter (8) mit einer Abgasturbine (9) in einer Abgasleitung (10) der Brennkraftmaschine (1) gekoppelt ist.

16. Brennkraftmaschine nach Anspruch 15, **dadurch gekennzeichnet, dass** als Stelleinrichtung ein Verdichter-Bypassventil (6) zur Umgehung des Verdichters (8) in einer Verdichter-Bypassleitung (23) angeordnet ist, die einen Verdichtereingang (8a) direkt mit einem Verdichterausgang (8b) verbindet, wobei zum Ändern einer Ventilstellung des Verdichter-Bypassventils (6) ein Stellsignal von der Regelvorrichtung (19) über eine Steuerleitung (22) an das Verdichter-Bypassventil (6) meldbar ist.

17. Brennkraftmaschine nach Anspruch 15 oder 16, **dadurch gekennzeichnet, dass** die Abgasturbine (9) verstellbare Turbinenschaufeln als Stelleinrichtung aufweist, wobei zum Ändern einer Geometrie der Turbinenschaufeln ein Stellsignal von der Regelvorrichtung (19) über eine Steuerleitung (22) an die Abgasturbine (9) meldbar ist.

**18.** Brennkraftmaschine nach einem der Ansprüche 15 bis 17, **dadurch gekennzeichnet, dass** als Stelleinrichtung ein Abgasturbinen-Bypassventil (11) zur Umgehung der Abgasturbine (9) in einer Abgas-Bypassleitung (12) angeordnet ist, die einen Abgasturbineneingang (9a) direkt mit einem Abgasturbinenausgang (9b) verbindet, wobei zum Ändern einer Ventilstellung des Abgasturbinen-Bypassventils (11) ein Stellsignal von der Regelvorrichtung (19) über eine Steuerleitung (22) an das Abgasturbinen-Bypassventil (11) meldbar ist.

**19.** Brennkraftmaschine nach einem der Ansprüche 13 bis 18, **dadurch gekennzeichnet, dass** in der Luftzufuhrleitung (5) ein Mischer (13) angeordnet ist, wobei eine Brennstoffleitung (14) zur Einbringung von Brennstoff (G) und eine Luftleitung (15) zur Einbringung von Luft (L) in den Mischer (13) münden und ein Mischerausgang (13a) des Mischers (13) in die Luftzufuhrleitung (5) mündet.

**20.** Brennkraftmaschine nach Anspruch 19, **dadurch gekennzeichnet, dass** als Stelleinrichtung ein Mischer-Bypassventil (16) zur Umgehung des Mischers (13) in einer die Luftleitung (15) direkt mit dem Mischerausgang (13a) verbindenden Mischer-Bypassleitung (17) angeordnet ist, wobei zum Ändern einer Ventilstellung des Mischer-Bypassventils (16) ein Stellsignal von der Regelvorrichtung (19) über eine Steuerleitung (22) an das Mischer-Bypassventil (16) meldbar ist.

**21.** Brennkraftmaschine nach Anspruch 19 oder 20, **dadurch gekennzeichnet, dass** als Stelleinrichtung ein Brennstoffventil (18) in der Brennstoffleitung (14) angeordnet ist, wobei zum Ändern einer Ventilstellung des Brennstoffventils (18) ein Stellsignal von der Regelvorrichtung (19) über eine Steuerleitung (22) an das Brennstoffventil (18) meldbar ist.

**22.** Brennkraftmaschine nach einem der Ansprüche 13 bis 18, **dadurch gekennzeichnet, dass** über eine Brennstoffzufuhrleitung (31) ein Brennstoff (G) in den wenigstens einen Brennraum (2) einbringbar ist, wobei als Stelleinrichtung wenigstens ein Brennstoffdosierventil (28) in der Brennstoffzufuhrleitung (31) angeordnet ist, wobei zum Ändern einer Ventilstellung des wenigstens einen Brennstoffdosierventils (28) ein Stellsignal von der Regelvorrichtung (19) über eine Steuerleitung (22) an das wenigstens eine Brennstoffdosierventil (28) meldbar ist.

## Claims

**1.** A method of operating an internal combustion engine (1), in particular a gas engine, comprising at least one combustion chamber (2) to which a charge air (A) is fed with a variable charge pressure ($p_a$) and/or a variable amount of charge air, wherein a cylinder pressure value ($p_i$) is ascertained from at least one measurement value ($p_c$) of a sensor arranged in the at least one combustion chamber (2), **characterised in that** the cylinder pressure value ($p_i$) is regulated by altering the charge pressure ($p_a$) and/or by altering the amount of charge air as a setting value or values to a cylinder pressure target value ($p_s$), wherein the cylinder pressure target value ($p_s$) is selected in dependence on a power (P) of the internal combustion engine (1), wherein the at least one measurement value ($p_c$) is ascertained prior to an ignition in the combustion chamber (2), preferably in a range of between about 30 and 55 degrees crankshaft angle before a top dead center position of a piston delimiting the combustion chamber (2), particularly preferably at approximately a 35 degrees crankshaft angle before the top dead center position of the piston or at approximately a 49 degrees crankshaft angle before the top dead center position of the piston.

**2.** A method as set forth in claim 1 **characterised in that** at least two and preferably all combustion chambers (2) of the internal combustion engine (1) are respectively equipped with a sensor (3) for determining the cylinder pressure, wherein a respective cylinder-individual pressure value of the combustion chamber (2) in question is ascertained from at least one measurement value ($p_c$) of a sensor (3), wherein the cylinder pressure value ($p_i$) is ascertained from the cylinder-individual pressure values of the combustion chambers (2).

**3.** A method as set forth in claim 2 **characterised in that** the median or the arithmetic mean value of the ascertained cylinder-individual pressure values of the combustion chambers (2) is ascertained as the cylinder pressure value ($p_i$).

**4.** A method as set forth in one of claims 1 through 3 **characterised in that** the respective cylinder pressure target value ($p_s$) is predetermined from an operating characteristic (4) which contains an association of cylinder pressure target value ($p_s$) with power (P) of the internal combustion engine (1) in dependence on the power (P) of the internal combustion engine (1) for substantially constant values for nitrogen oxide emissions.

**5.** A method as set forth in one of claims 1 through 4 **characterised in that** the charge air (A) is fed to the at least one combustion chamber (2) by way of an air feed conduit (5), wherein the charge pressure ($p_a$) is varied by adjustment of at least one adjusting device (6, 7) arranged in the air feed conduit (5), preferably by adjustment of a compressor bypass value (6) and/or a throttle flap (7).

6. A method as set forth in one of claims 1 through 5 **characterised in that** the charge air (A) is fed to the at least one combustion chamber (2) by way of an air feed conduit (5), wherein the amount of charge air is varied by adjustment of a variable valve gear (32).

7. A method as set forth in one of claims 1 through 6 **characterised in that** the charge air (A) is fed to the at least one combustion chamber (2) by way of an air feed conduit (5) equipped with a compressor (8), wherein the compressor (8) is coupled to an exhaust gas turbine (9) in an exhaust gas conduit (10) of the internal combustion engine (1), wherein the charge pressure ($p_a$) is varied by displacement of turbine blades of the exhaust gas turbine (9) or by adjustment of an exhaust gas turbine bypass valve (11) in the exhaust gas conduit (10), wherein the exhaust gas turbine bypass valve (11) is arranged for bypassing the exhaust gas turbine (9) in an exhaust gas bypass conduit (12) which directly connects an exhaust gas turbine inlet (9a) to an exhaust gas turbine outlet (9b).

8. A method as set forth in one of claims 1 through 7 **characterised in that** a fuel-air mixture including the charge air (A) is introduced into the at least one combustion chamber (2), wherein the charge pressure ($p_a$) is varied by adjustment of a fuel-air ratio of the fuel-air mixture, by the charge pressure ($p_a$) of the charge air (A) being adjusted in dependence on the power (P) of the internal combustion engine (1) upon and/or after a variation in the fuel-air ratio of the fuel-air mixture.

9. A method as set forth in claim 8 **characterised in that** as a fuel-air mixture the charge air (A) is fed to the at least one combustion chamber (2) by way of an air feed conduit (5) equipped with a mixer (13), wherein a fuel conduit (14) for the introduction of fuel (G) and an air conduit (15) for the introduction of air (L) open into the mixer (13) and a mixer outlet (13a) of the mixer (13) opens into the air feed conduit (5), wherein the fuel-air ratio of the charge air (A) is varied by adjustment of a mixer bypass valve (16), wherein the mixer bypass valve (16) for bypassing the mixer (13) is arranged in a mixer bypass conduit (17) directly connecting the air conduit (15) to the mixer outlet (13a).

10. A method as set forth in claim 8 or claim 9 **characterised in that** as a fuel-air mixture the charge air (A) is fed to the at least one combustion chamber (2) by way of an air feed conduit (5) equipped with a mixer (13), wherein a fuel conduit (14) for the introduction of fuel (G) and an air conduit (15) for the introduction of air (L) open into the mixer (13) and a mixer outlet (13a) of the mixer (13) opens into the air feed conduit (5), wherein the fuel-air ratio of the charge air (A) is varied by adjustment of a fuel valve (18) arranged in the fuel conduit (14), wherein the amount of fuel fed to the mixer (13) by way of the fuel conduit (14) is varied by a change in the position of the fuel valve (18).

11. A method as set forth in claim 8 **characterised in that** the fuel-air mixture includes the charge air (A) and a fuel (G), wherein the charge air (A) is fed to the at least one combustion chamber (2) by way of an air feed conduit (5) and the fuel (G) is fed to the at least one combustion chamber (2) by way of a fuel feed conduit (31) equipped with at least one fuel metering valve (28), wherein the fuel-air ratio of the fuel-air mixture is varied by altering a position of the at least one fuel metering valve (28).

12. A regulating device (19) for regulating a cylinder pressure value ($p_i$) of an internal combustion engine (1) equipped with at least one combustion chamber (2), wherein a charge air (A) can be introduced into the at least one combustion chamber (2) by way of an air feed conduit (5) of the internal combustion engine (1) with a variable charge pressure ($p_a$) and/or a variable amount of charge air, wherein the at least one combustion chamber (2) is equipped with a sensor (3) for determining the cylinder pressure, wherein at least one measurement value ($p_c$) of the sensor can be signaled to the regulating device (19) by way of a signal line (20), wherein there is provided a power measuring device (21) for ascertaining a power (P) of the internal combustion engine (1), wherein the power (P) can be signaled to the regulating device (19) by way of a further signal line (20), **characterised in that** the at least one measurement value ($p_c$) is ascertained prior to an ignition in the combustion chamber (2), wherein the regulating device (19) ascertains the cylinder pressure value ($p_i$) from the at least one measurement value ($p_c$) of the sensor (3), wherein in the event of a deviation of the cylinder pressure value ($p_i$) from a cylinder pressure target value ($p_s$) dependent on the power (P) of the internal combustion engine (1) the regulating device (19)

- for altering the charge pressure ($p_a$) signals an adjusting signal by way of a control line (22) to at least one adjusting device (6, 7, 11, 16, 18, 28) until the cylinder pressure value ($p_i$) and the cylinder pressure target value ($p_s$) coincide, wherein preferably the at least one adjusting device (6, 7, 11, 16, 18, 28) is arranged in the air feed conduit (5) or in an exhaust gas conduit (10) of the internal combustion engine (1), and/or

- for altering the amount of charge air signals an adjusting signal by way of a control line (22) to a variable valve gear (32) until the cylinder pressure value ($p_i$) and the cylinder pressure target value ($p_s$) coincide.

13. An internal combustion engine (1), in particular a gas engine, comprising at least one combustion chamber (2) equipped with a sensor (3) for determining the cylinder pressure, and a regulating device (19) as set forth in claim 12.

14. An internal combustion engine as set forth in claim 13 **characterised in that** a throttle flap (7) is arranged as the adjusting device in the air feed conduit (5), wherein for altering a position of the throttle flap (7) an adjusting signal can be signaled by the regulating device (19) to the throttle flap (7) by way of a control line (22).

15. An internal combustion engine as set forth in claim 13 or claim 14 **characterised in that** a compressor (8) for compressing the charge air (A) is arranged in the air feed conduit (5), wherein the compressor (8) is coupled to an exhaust gas turbine (9) in an exhaust gas conduit (10) of the internal combustion engine (1).

16. An internal combustion engine as set forth in claim 15 **characterised in that** a compressor bypass valve (6) is arranged as the adjusting device for bypassing the compressor (8) in a compressor bypass conduit (23) which connects a compressor inlet (8a) directly to a compressor outlet (8b), wherein to alter a valve position of the compressor bypass valve (6) an adjusting signal can be signaled by the regulating device (19) to the compressor bypass valve (6) by way of a control line (22).

17. An internal combustion engine as set forth in claim 15 or claim 16 **characterised in that** the exhaust gas turbine (9) has adjustable turbine blades as the adjusting device, wherein to alter a geometry of the turbine blades an adjusting signal can be signaled by the regulating device (19) by way of a control line (22) to the exhaust gas turbine (9).

18. An internal combustion engine as set forth in one of claims 15 through 17 **characterised in that** an exhaust gas turbine bypass valve (11) is arranged as the adjusting device for bypassing the exhaust gas turbine (9) in an exhaust gas bypass conduit (12) which connects an exhaust gas turbine inlet (9a) directly to an exhaust gas turbine outlet (9b), wherein to alter a valve position of the exhaust gas turbine bypass valve (11) an adjusting signal can be signaled by the regulating device (19) by way of a control line (22) to the exhaust gas turbine bypass valve (11).

19. An internal combustion engine as set forth in one of claims 13 through 18 **characterised in that** a mixer (13) is arranged in the air feed conduit (5), wherein a fuel conduit (14) for the introduction of fuel (G) and an air conduit (15) for the introduction of air (L) open into the mixer (13) and a mixer outlet (13a) of the mixer (13) opens into the air feed conduit (5).

20. An internal combustion engine as set forth in claim 19 **characterised in that** as the adjusting device a mixer bypass valve (16) for bypassing the mixer (13) is arranged in a mixer bypass conduit (17) connecting the air conduit (15) directly to the mixer outlet (13a), wherein to alter a valve position of the mixer bypass valve (16) an adjusting signal can be signaled by the regulating device (19) by way of a control line (22) to the mixer bypass valve (16).

21. An internal combustion engine as set forth in claim 19 or claim 20 **characterised in that** a fuel valve (18) is arranged in the fuel conduit (14) as the adjusting device, wherein to alter a valve position of the fuel valve (18) an adjusting signal can be signaled by the regulating device (19) by way of a control line (22) to the fuel valve (18).

22. An internal combustion engine as set forth in one of claims 13 through 18 **characterised in that** a fuel (G) can be introduced into the at least one combustion chamber (2) by way of a fuel feed conduit (31), wherein at least one fuel metering valve (28) is arranged in the fuel feed conduit (31) as the adjusting device, wherein to alter a valve position of the at least one fuel metering valve (28) an adjusting signal can be signaled by the regulating device (19) by way of a control line (22) to the at least one fuel metering valve (28).

**Revendications**

1. Procédé de fonctionnement d'un moteur à combustion interne (1), plus particulièrement d'un moteur à gaz, avec au moins une chambre de combustion (2), à laquelle un air d'alimentation (A) avec une pression d'admission modifiable ($p_a$) et / ou une quantité d'air d'alimentation modifiable est amené, dans lequel à partir d'au moins une valeur mesurée ($p_c$) d'un capteur (3) disposé dans au moins une chambre de combustion (2) est déterminée une valeur de pression de cylindre ($p_i$), **caractérisé en ce que** la valeur de pression de cylindre ($p_i$) est réglée par modification de la pression d'admission ($p_a$) et / ou par modification de la quantité d'air d'alimentation comme variable(s) réglante(s) sur une valeur théorique de pres-

sion de cylindre ($p_s$), dans lequel la valeur théorique de pression de cylindre ($p_s$) est choisie en fonction d'une puissance (P) du moteur à combustion interne (1), dans lequel la au moins une valeur mesurée ($p_c$) est déterminée avant un allumage dans la chambre de combustion (2), de préférence dans une zone d'un angle de vilebrequin de 30 à 55 degrés environ avant un point mort haut d'un piston limitant la chambre de combustion (2), plus particulièrement de préférence avec un angle de vilebrequin de 35 degrés environ avant le point mort haut du piston ou avec un angle de vilebrequin de 49 degrés environ avant le point mort haut du piston.

2. Procédé selon la revendication 1, **caractérisé en ce que** au moins deux, de préférence toutes les chambres de combustion (2) du moteur à combustion interne (1) sont à chaque fois équipées d'un capteur (3) pour déterminer la pression de cylindre, dans lequel à chaque fois à partir d'au moins une valeur mesurée ($p_c$) d'un capteur (3) est déterminée une valeur de pression individuelle par cylindre de la chambre de combustion concernée (2), dans lequel est déterminée la valeur de pression de cylindre ($p_i$) à partir des valeurs de pression individuelles par cylindre des chambres de combustion (2).

3. Procédé selon la revendication 2, **caractérisé en ce que** comme valeur de pression de cylindre ($p_i$) est déterminée la valeur médiane ou la valeur moyenne arithmétique des valeurs de pression individuelles par cylindre des chambres de combustion (2).

4. Procédé selon l'une des revendications 1 à 3, **caractérisé en ce que** la valeur théorique de pression de cylindre respective ($p_s$) est prédéfinie à partir d'une caractéristique de fonctionnement (4), qui renferme une affectation de la valeur théorique de pression de cylindre ($p_s$) à une puissance (P) du moteur à combustion interne (1) en fonction de la puissance (P) du moteur à combustion interne pour des valeurs essentiellement constantes pour des émissions d'oxyde d'azote.

5. Procédé selon l'une des revendications 1 à 4, **caractérisé en ce que** l'air d'alimentation (A) est amené à la au moins une chambre de combustion (2) par une conduite d'amenée d'air (5), dans lequel la pression d'admission ($p_a$) est modifiée par réglage d'au moins un dispositif de réglage (6, 7) disposé dans la conduite d'amenée d'air (5), de préférence par réglage d'une soupape de dérivation de compresseur (6) et / ou d'une soupape d'étranglement (7).

6. Procédé selon l'une des revendications 1 à 5, **caractérisé en ce que** l'air d'alimentation (A) est amené à la au moins une chambre de combustion (2) par une conduite d'amenée d'air (5), dans lequel la quantité d'air d'alimentation est modifiée par réglage d'une commande de soupape variable (32).

7. Procédé selon l'une des revendications 1 à 6, **caractérisé en ce que** l'air d'alimentation (A) est amené à la au moins une chambre de combustion (2) par une conduite d'amenée d'air (5) équipée d'un compresseur (8), dans lequel le compresseur (8) est couplé à une turbine à gaz d'échappement (9) dans une conduite de gaz d'échappement (10) du moteur à combustion interne (1), dans lequel la pression d'admission ($p_a$) est modifiée par déplacement des aubes de turbine de la turbine à gaz d'échappement (9) ou par réglage d'une soupape de dérivation de turbines à gaz d'échappement (11) dans la conduite de gaz d'échappement (10), dans lequel la soupape de dérivation de turbines à gaz d'échappement (11), pour contourner la turbine à gaz d'échappement (9), est disposée dans une conduite de dérivation de gaz d'échappement (12), qui relie une entrée de turbine à gaz d'échappement (9a) directement à une sortie de turbine à gaz d'échappement (9b).

8. Procédé selon l'une des revendications 1 à 7, **caractérisé en ce qu'**un mélange air-carburant comprenant l'air d'alimentation (A) est introduit dans la au moins une chambre de combustion (2), dans lequel l'air d'alimentation ($p_a$) est modifié par ajustement d'un rapport air-carburant du mélange air-carburant, dans lequel lors et / ou après modification du rapport air-carburant du mélange air-carburant, la pression d'admission ($p_a$) de l'air d'alimentation (A) est réglée en fonction de la puissance (P) du moteur à combustion interne.

9. Procédé selon la revendication 8, **caractérisé en ce que** comme mélange air-carburant est amené l'air d'alimentation (A) à la au moins une chambre de combustion (2) par une conduite d'amenée d'air (5) équipée d'un mélangeur (13), dans lequel une conduite de carburant (14) pour l'introduction de carburant (G) et une conduite d'air (15) pour l'introduction d'air (L) débouchent dans le mélangeur (13) et une sortie de mélangeur (13a) du mélangeur (13) débouche dans la conduite d'amenée d'air (5), dans lequel le rapport air-carburant de l'air d'alimentation (A) est modifié par réglage d'une soupape de dérivation de mélangeur (16), dans lequel la soupape de dérivation de mélangeur (16) pour contourner le mélangeur (13) est disposée dans une conduite de dérivation de mélangeur (17) reliant directement la conduite d'air (15) à la sortie de mélangeur (13a).

10. Procédé selon la revendication 8 ou 9, **caractérisé en ce que** comme mélange air-carburant est amené l'air d'alimentation (A) à la au moins une chambre de combustion (2) par une conduite d'amenée d'air (5) équipée d'un mélangeur (13), dans lequel une conduite de carburant (14) pour l'introduction de carburant (G) et une conduite d'air (15) pour l'introduction d'air (L) débouchent dans le mélangeur (13) et une sortie de mélangeur (13a) du mélangeur (13) débouche dans la conduite d'amenée d'air (5), dans lequel le rapport air-carburant de l'air d'alimentation (A) est modifié par réglage d'une soupape de carburant (18) disposée dans la conduite de carburant (14), dans lequel, par une modification de la position de la soupape de carburant (18), la quantité de carburant amenée au mélangeur (13) par la conduite de carburant (14) est modifiée.

11. Procédé selon la revendication 8, **caractérisé en ce que** le mélange air-carburant comprend l'air d'alimentation (A) et un carburant (G), dans lequel l'air d'alimentation (A) est amené, par une conduite d'amenée d'air (5) et le carburant (G) par une conduite d'amenée de carburant (31) équipée d'au moins une soupape de dosage de carburant (28), à la au moins une chambre de combustion (2), dans lequel le rapport air-carburant du mélange air-carburant est modifié par modification d'une position de la au moins une soupape de dosage du carburant (28).

12. Dispositif de réglage (19) pour régler une valeur de pression de cylindre ($p_i$) d'un moteur à combustion interne (1) équipé d'au moins une chambre de combustion (2), dans lequel par une conduite d'amenée d'air (5) du moteur à combustion interne (1) peut être introduit un air d'alimentation (A) avec une pression d'admission modifiable ($p_a$) et / ou une quantité d'air d'alimentation modifiable dans la au moins une chambre de combustion (2), dans lequel la au moins une chambre de combustion (2) est équipée d'un capteur (3) pour déterminer la pression de cylindre, dans lequel au moins une valeur mesurée ($p_c$) du capteur (3) peut être signalée par un câble de signalisation (20) du dispositif de réglage (19), dans lequel un dispositif de mesure de puissance (21) pour déterminer une puissance (P) du moteur à combustion interne (1) est prévu, dans lequel la puissance (P) peut être signalée par un autre câble de signalisation (20) du dispositif de réglage (19), **caractérisé en ce que** la au moins une valeur mesurée ($p_c$) est déterminée avant un allumage dans la chambre de combustion (2), dans lequel le dispositif de réglage (19) détermine la valeur de pression de cylindre ($p_i$) à partir de la au moins une valeur mesurée ($p_c$) du capteur (3), dans lequel le dispositif de réglage (19) lors d'un écart de la valeur de pression de cylindre ($p_i$) d'une valeur théorique de pression de cylindre ($p_s$) dépendante de la puissance (P) du moteur à combustion interne (1)

    - pour modifier la pression d'admission ($p_a$), indique un signal correcteur à au moins un dispositif de réglage (6, 7, 11, 16, 18, 28) par une conduite de commande (22) jusqu'à ce que la valeur de pression de cylindre ($p_i$) et la valeur théorique de pression de cylindre ($p_s$) coïncident, dans lequel de préférence le au moins un dispositif de réglage (6, 7, 11, 16, 18, 28) est disposé dans la conduite d'amenée d'air (5) ou dans une conduite de gaz d'échappement (10) du moteur à combustion interne (1) et / ou
    - pour modifier la quantité d'air d'alimentation, indique un signal correcteur à une commande de soupape variable (32) par une conduite de commande (22), jusqu'à ce que la valeur de pression de cylindre ($p_i$) et la valeur théorique de cylindre ($p_s$) coïncident.

13. Moteur à combustion interne (1), plus particulièrement moteur à gaz, avec au moins une chambre de combustion (2) équipée d'un capteur (3) pour déterminer la pression de cylindre et avec un dispositif de réglage (19) selon la revendication 12.

14. Moteur à combustion interne selon la revendication 13, **caractérisé en ce que** dans la conduite d'amenée d'air (5) est disposée, comme dispositif de réglage, une soupape d'étranglement (7), dans lequel, pour modifier une position de la soupape d'étranglement (7), un signal correcteur du dispositif de réglage (19) peut être indiqué à la soupape d'étranglement (7) par une conduite de commande (22).

15. Moteur à combustion interne selon la revendication 13 ou 14, **caractérisé en ce que** dans la conduite d'amenée d'air (5) est disposé un compresseur (8) pour comprimer l'air d'alimentation (A), dans lequel le compresseur (8) est couplé à une turbine à gaz d'échappement (9) dans une conduite de gaz d'échappement (10) du moteur à combustion interne (1).

16. Moteur à combustion interne selon la revendication 15, **caractérisé en ce que** comme dispositif de réglage est disposé une soupape de dérivation de compresseur (6) pour contourner le compresseur (8) dans une conduite de dérivation de compresseur (23), qui relie une entrée de compresseur (8a) directement à une sortie de compresseur (8b), dans lequel pour modifier une position de soupape de la soupape de dérivation de compresseur (6), un signal correcteur du dispositif de réglage (19) peut être indiqué à la soupape de dérivation de compresseur (6) par une conduite de commande (22).

17. Moteur à combustion interne selon la revendication 15 ou 16, **caractérisé en ce que** la turbine à gaz d'échappement (9) présente des aubes de turbine réglables comme dispositif de réglage, dans lequel pour modifier une géométrie des aubes de turbine, un signal correcteur du dispositif de réglage (19) peut être indiqué à la turbine à gaz d'échappement (9) par une conduite de commande (22).

18. Moteur à combustion interne selon l'une des revendications 15 à 17, **caractérisé en ce que** comme dispositif de réglage est disposée, pour contourner la turbine à gaz d'échappement (9), une soupape de dérivation de turbine à gaz d'échappement (11) dans une conduite de dérivation de gaz d'échappement (12), qui relie une entrée de turbine de gaz d'échappement (9a) directement à une sortie de turbine à gaz d'échappement (9b), dans lequel pour modifier une position de soupape de la soupape de dérivation de turbines à gaz d'échappement (11), un signal correcteur du dispositif de réglage (19) peut être indiqué à la soupape de dérivation de turbines à gaz d'échappement (11) par une conduite de commande (22).

19. Moteur à combustion interne selon l'une des revendications 13 à 18, **caractérisé en ce que** dans la conduite d'amenée d'air (5) est disposé un mélangeur (13), dans lequel une conduite de carburant (14) pour l'introduction de carburant (G) et une conduite d'air (15) pour l'introduction d'air (L) débouchent dans le mélangeur (13) et une sortie de mélangeur (13a) du mélangeur (13) débouche dans la conduite d'amenée d'air (5).

20. Moteur à combustion interne selon la revendication 19, **caractérisé en ce que** comme dispositif de réglage est disposée une soupape de dérivation de mélangeur (16) pour contourner le mélangeur (13) dans une conduite de dérivation de mélangeur (17) reliant la conduite d'air (15) directement à la sortie de mélangeur (13a), dans lequel pour modifier une position de soupape de la soupape de dérivation de mélangeur (16), un signal correcteur du dispositif de réglage (19) peut être indiqué à la soupape de dérivation de mélangeur (16) par une conduite de commande (22).

21. Moteur à combustion interne selon la revendication 19 ou 20, **caractérisé en ce que** comme dispositif de réglage est disposée une soupape de carburant (18) dans la conduite de carburant (14), dans lequel pour modifier une position de soupape de la soupape de carburant (18), un signal correcteur du dispositif de réglage (19) peut être indiqué à la soupape de carburant (18) par une conduite de commande (22).

22. Moteur à combustion interne selon l'une des revendications 13 à 18, **caractérisé en ce qu'**un carburant (G) peut être introduit dans la au moins une chambre de combustion (2) par une conduite d'amenée de carburant (31), dans lequel comme dispositif de réglage est disposée au moins une soupape de dosage de carburant (28) dans la conduite d'amenée de carburant (31), dans lequel pour modifier une position de soupape de la au moins une soupape de dosage de carburant (28), un signal correcteur du dispositif de réglage (19) peut être indiqué à la au moins une soupape de dosage de carburant (28) par une conduite de commande (22).

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0259382 B1
- EP 1662121 A
- DE 19736131 C1
- EP 1162357 A
- EP 2698521 A
- DE 102012021778